(19) Europäisches Patentamt / European Patent Office / Office européen des brevets

(11) **EP 3 933 661 B1**

(12) **EUROPEAN PATENT SPECIFICATION**

(45) Date of publication and mention of the grant of the patent:
**27.09.2023 Bulletin 2023/39**

(21) Application number: **20766199.2**

(22) Date of filing: **30.01.2020**

(51) International Patent Classification (IPC):
**G06K 7/14** *(2006.01)*    **G06K 7/10** *(2006.01)*

(52) Cooperative Patent Classification (CPC):
**G06K 7/1452**

(86) International application number:
**PCT/JP2020/003334**

(87) International publication number:
**WO 2020/179291 (10.09.2020 Gazette 2020/37)**

(54) **SYMBOL BORDER IDENTIFICATION DEVICE, SYMBOL BORDER IDENTIFICATION METHOD, AND IMAGE PROCESSING PROGRAM**

VORRICHTUNG, VERFAHREN UND PROGRAMM ZUR IDENTIFIZIERUNG VON SYMBOLGRENZEN SOWIE BILDVERARBEITUNGSPROGRAMM

DISPOSITIF D'IDENTIFICATION DE BORDURE DE SYMBOLE, PROCÉDÉ D'IDENTIFICATION DE BORDURE DE SYMBOLE ET PROGRAMME DE TRAITEMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2019 JP 2019038024**

(43) Date of publication of application:
**05.01.2022 Bulletin 2022/01**

(73) Proprietor: **OMRON Corporation**
**Shiokoji-dori, Shimogyo-ku,**
**Kyoto-shi**
**Kyoto 600-8530 (JP)**

(72) Inventor: **FUJIKAWA, Masahiro**
**Kyoto-shi, Kyoto 600-8530 (JP)**

(74) Representative: **Emde, Eric**
**Wagner & Geyer Partnerschaft mbB**
**Patent- und Rechtsanwälte**
**Gewürzmühlstrasse 5**
**80538 München (DE)**

(56) References cited:
**JP-A- H07 234 915        JP-A- 2005 173 646**
**JP-A- 2007 102 386        JP-A- 2008 533 546**
**US-A1- 2014 008 442**

**Description**

BACKGROUND OF THE INVENTION

Field of the Invention

The invention relates to a symbol border identification device identifying a border of a symbol included in an image.

Description of Related Art

For the purpose of object identification, management, etc., symbols having information, such as one-dimensional symbols, two-dimensional symbols, etc., are used.

As a technique of using symbols, for example, a two-dimensional code reading device is disclosed in Patent Document 1. Specifically, the reading device includes a two-dimensional code outline presence region determination part which detects a guide cell vertex to determine a two-dimensional code outline presence region. In addition, the reading device is configured as including a guide cell circumscribing line detecting part detecting a guide cell circumscribing line, a timing cell circumscribing line detecting part detecting a timing cell circumscribing line, a timing cell detecting part detecting a timing cell, etc. The guide cell and the timing cell form the outer edge of the two-dimensional code.

[Prior Art Document]

[Patent Document]

[Patent Document 1] Japanese Laid-open No. 2002-329163 (published on November 15, 2002). Further attention is drawn to document US 2014/008442 A1 which relates to an image processing apparatus which includes a candidate point detecting section configured to detect a plurality of candidate points on a boundary of a code region of a two-dimensional code in an image capturing the two-dimensional code, by scanning the image starting from an internal point of the two-dimensional code in the image, the two-dimensional code including a plurality of modules being arranged in two dimensions; a calculating section configured to calculate a first boundary line using the candidate points; a selecting section configured to select the candidate points located within a distance less than a threshold value from the first boundary line; and a boundary line detecting section configured to detect a second boundary line calculated using the selected candidate points selected by the selecting section.

SUMMARY OF THE INVENTION

[Problems to be Solved by the Invention]

However, in the conventional technology, the identification of a symbol border is susceptible to the influence of disturbing noise. The disturbing noise includes, for example, dirt of a quiet zone provided on the outer side of the symbol, uneven printing, and noise on the edge of the symbol caused by printing on the casting surface, etc.

In the symbols containing information as described above, some symbols include a text string adjacent to the symbol. In the symbol reading device, etc., a region in which a text string is present is set as a text recognition region. Then, a text string recognition process is performed in the text recognition region by using the symbol reading device, etc. In such symbol reading device, when the border of the symbol is not properly identified, the text recognition region cannot be properly set. The reasons why the text recognition region cannot be set properly may include failure in recognizing the text, delayed text recognition processing time, etc.

An objective of an aspect of the invention is to make the identification of the border of a symbol less susceptible to the influence of disturbing noise and realize a symbol reading device capable of reducing processing time.

[Means for solving problems]

The invention is defined in the appended independent claims. Further embodiments of the invention are defined in the appended dependent claims.

In order to solve the above issues, a symbol border identification device according to an aspect of the invention is defined in claim 1.

In addition, a symbol border identification method according to an aspect of the invention is defined in claim 12.

[Inventive Effects]

According to an aspect of the invention, the identification of the border of a symbol can be less susceptible to the influence of disturbing noise, and the processing time for identifying the border of the symbol can be reduced.

BRIEF DESCRIPTION OF THE DRAWINGS

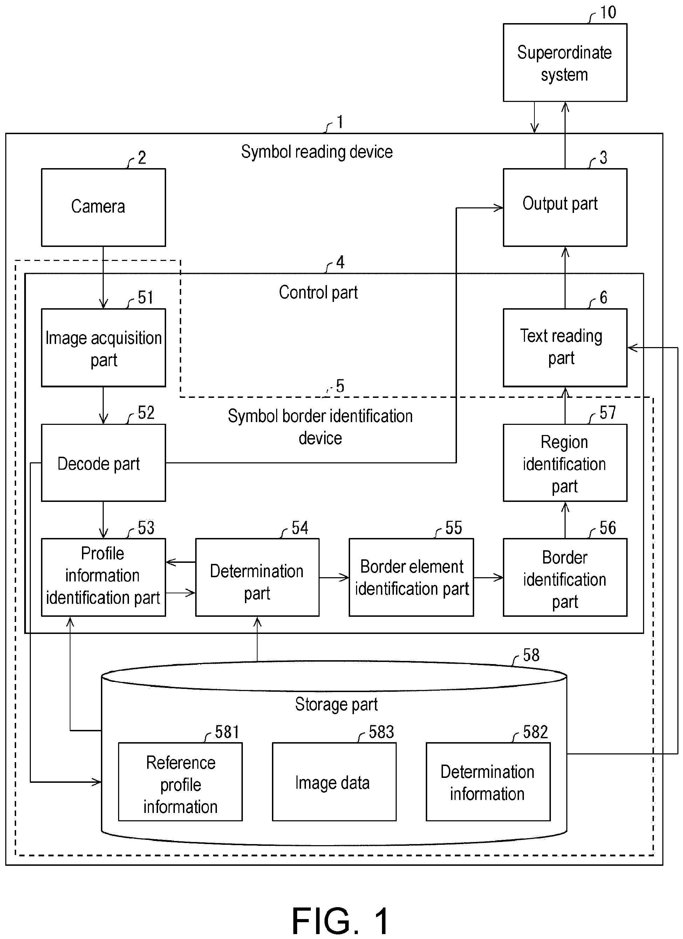

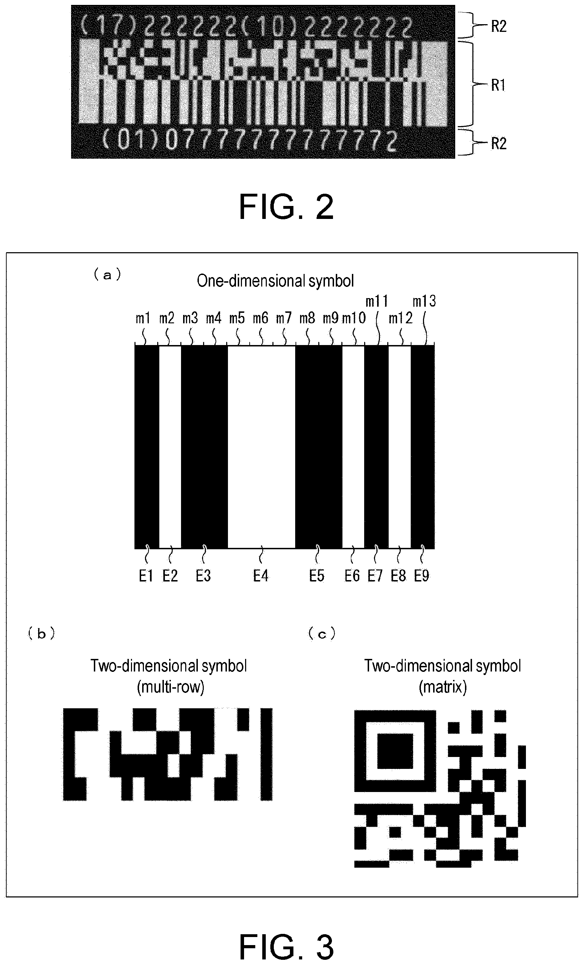

FIG. 1 is a block diagram illustrating an example of the configuration of components of a symbol reading device according to an embodiment of the invention. FIG. 2 is a diagram illustrating an example of a symbol whose border is identified by the symbol border identification device according to an embodiment of the invention.

(a) to (c) of FIG. 3 are diagrams illustrating examples of types of symbols whose borders are identified by the symbol border identification device according to an embodiment of the invention.

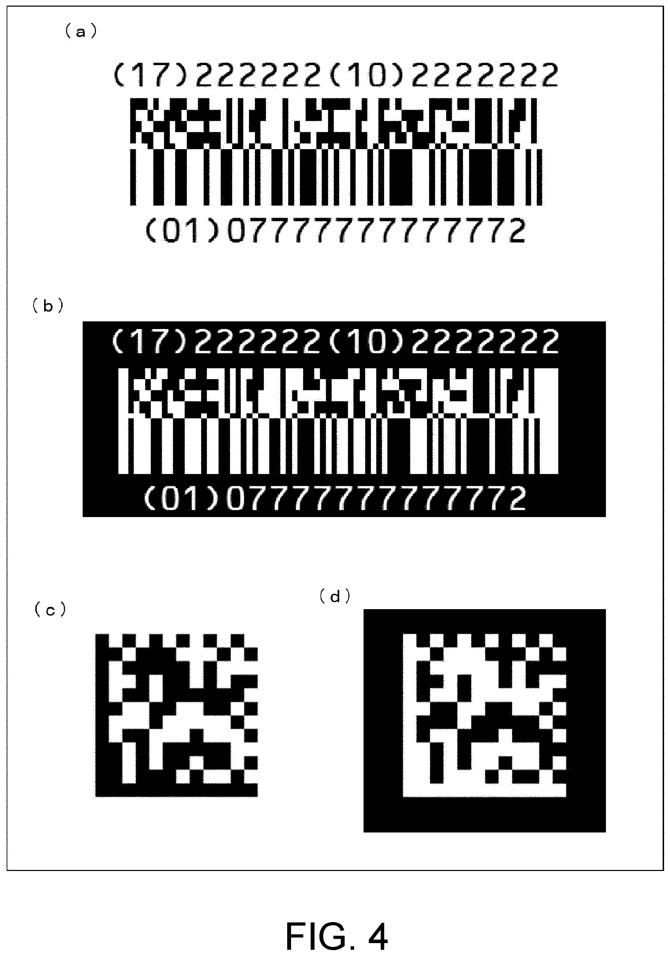

(a) to (d) of FIG. 4 are diagrams illustrating other examples of types of symbols whose borders are identified by the symbol border identification device according to an embodiment of the invention.

FIG. 5 is a flowchart illustrating an example of a flow of processes executed by the symbol border identification device according to an embodiment of the invention.

FIG. 6 is a schematic diagram illustrating a method with which a profile information identification part sets the direction of a scanning line according to an embodiment of the invention.

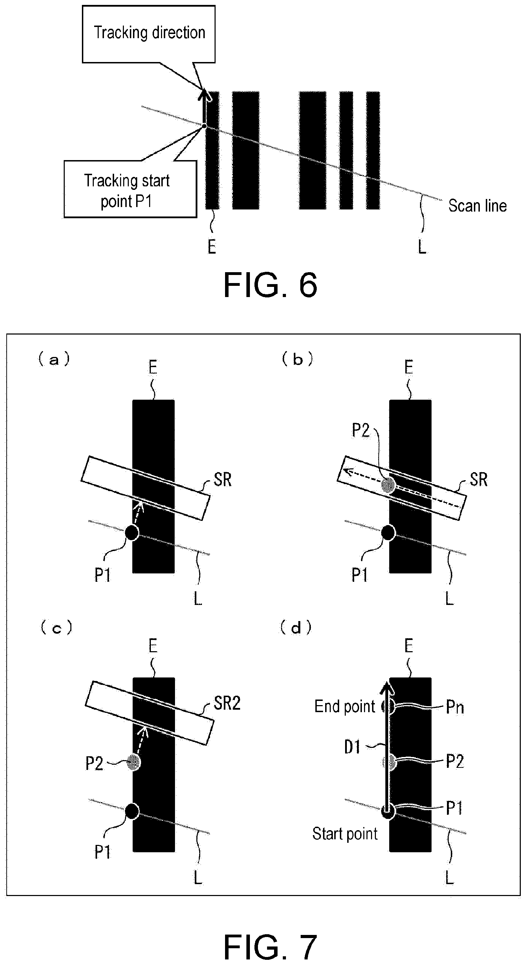

(a) to (d) of FIG. 7 are diagrams illustrating an example of the method with which the profile information identification part sets a module arrangement direction according to an embodiment of the invention.

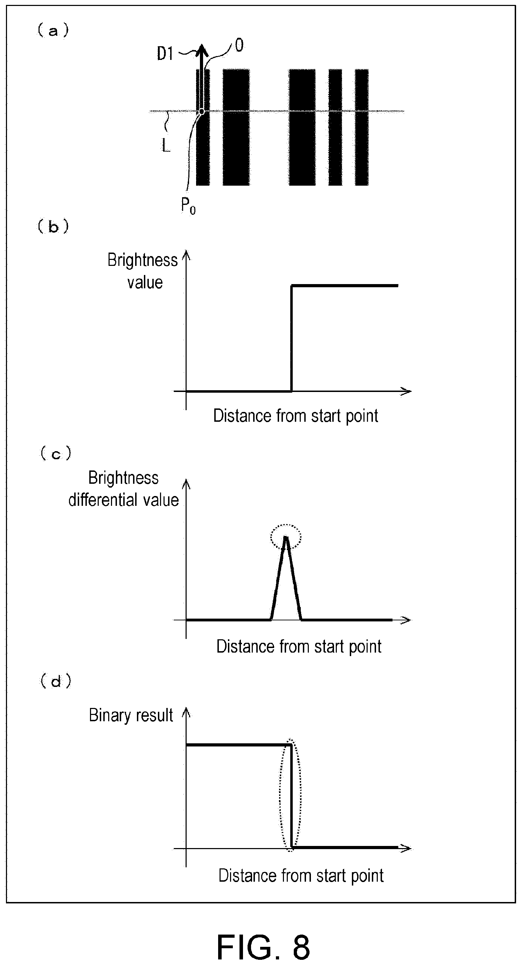

(a) to (d) of FIG. 8 are diagrams illustrating an example of identifying a border point candidate according to an embodiment of the invention.

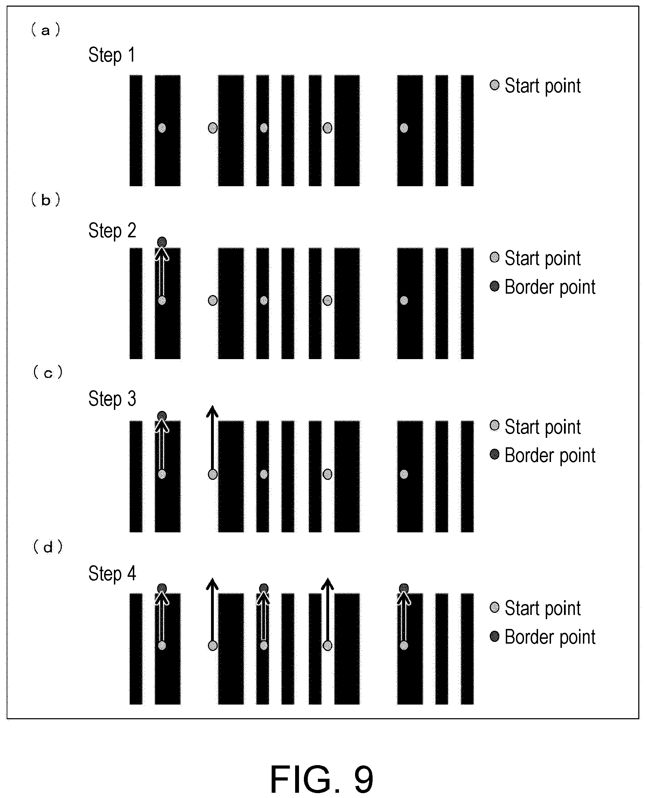

(a) to (d) of FIG. 9 are schematic diagrams illustrating a flow of a process for individually identifying multiple border points according to an embodiment of the invention.

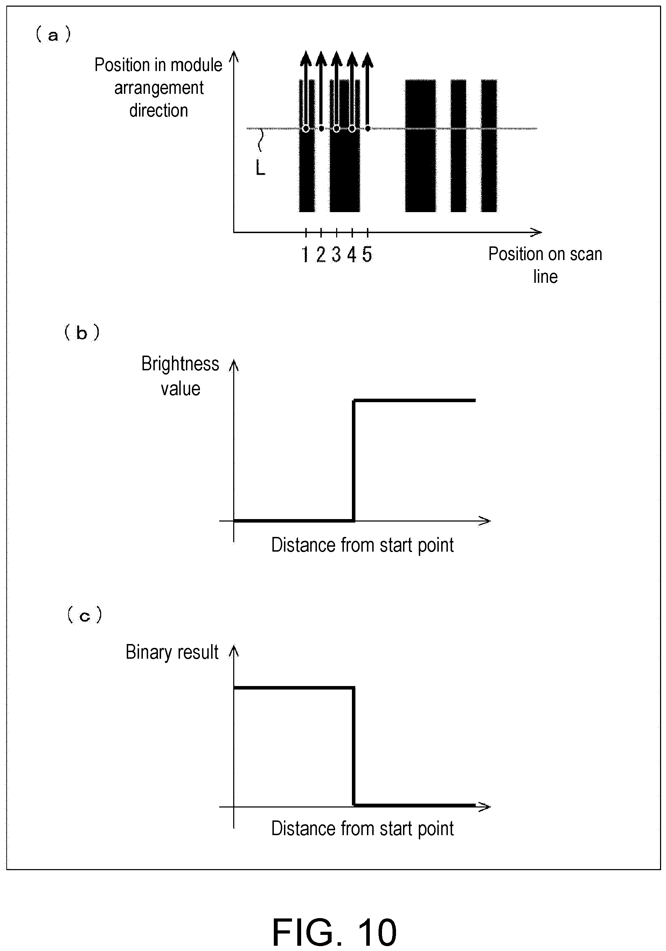

(a) to (c) of FIG. 10 are diagrams illustrating another example of identifying a border point candidate according to an embodiment of the invention.

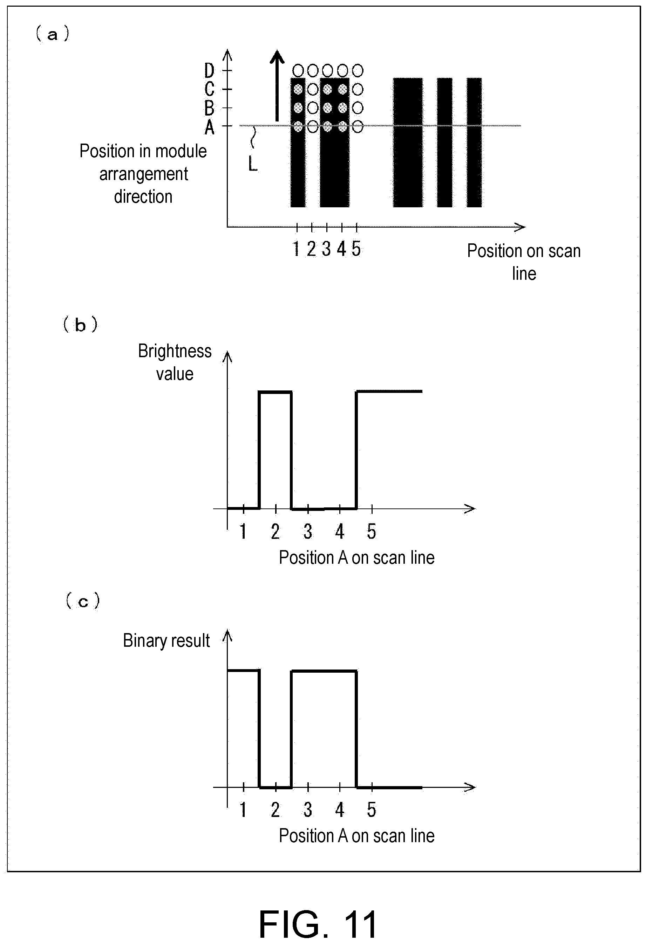

(a) to (c) of FIG. 11 are diagrams illustrating another example of identifying a border point candidate according to an embodiment of the invention.

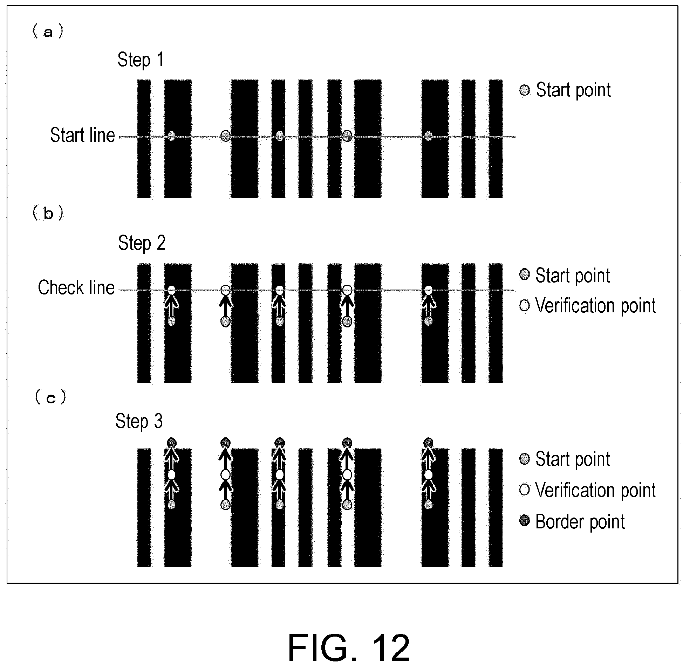

(a) to (c) of FIG. 12 are schematic diagrams illustrating an example of a flow of a process for simultaneously identifying multiple border points according to an embodiment of the invention.

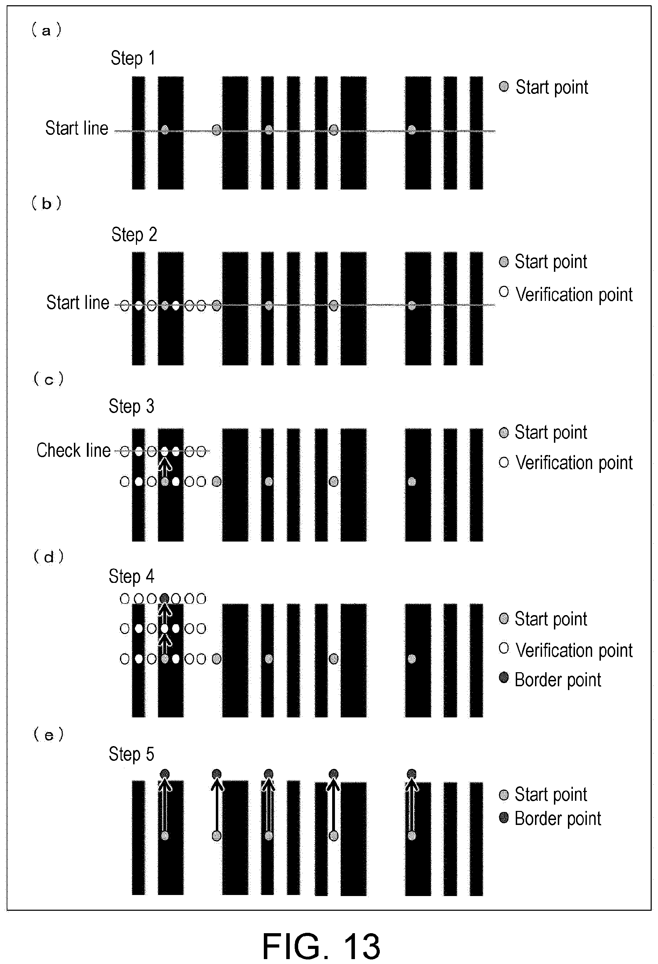

(a) to (e) of FIG. 13 are schematic diagrams illustrating an example of a flow of a process for identifying one border point candidate from multiple verification points according to an embodiment of the invention.

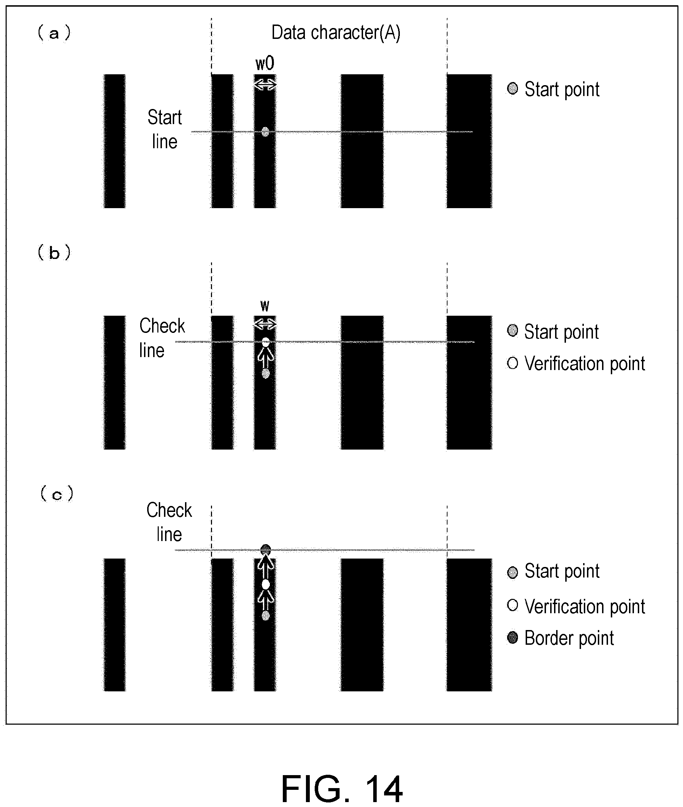

(a) to (c) of FIG. 14 are schematic diagrams illustrating an example of a flow of a process for identifying a border point candidate by using a width of an element in a scan line direction according to an embodiment of the invention.

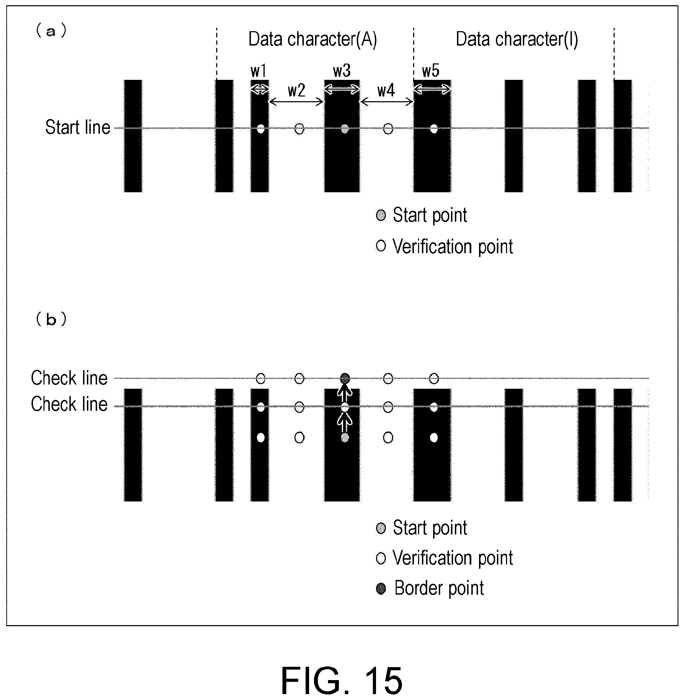

(a) and (b) of FIG. 15 are schematic diagrams illustrating an example of a flow of a process for identifying one border point candidate by using widths of multiple elements in the scan line direction according to an embodiment of the invention.

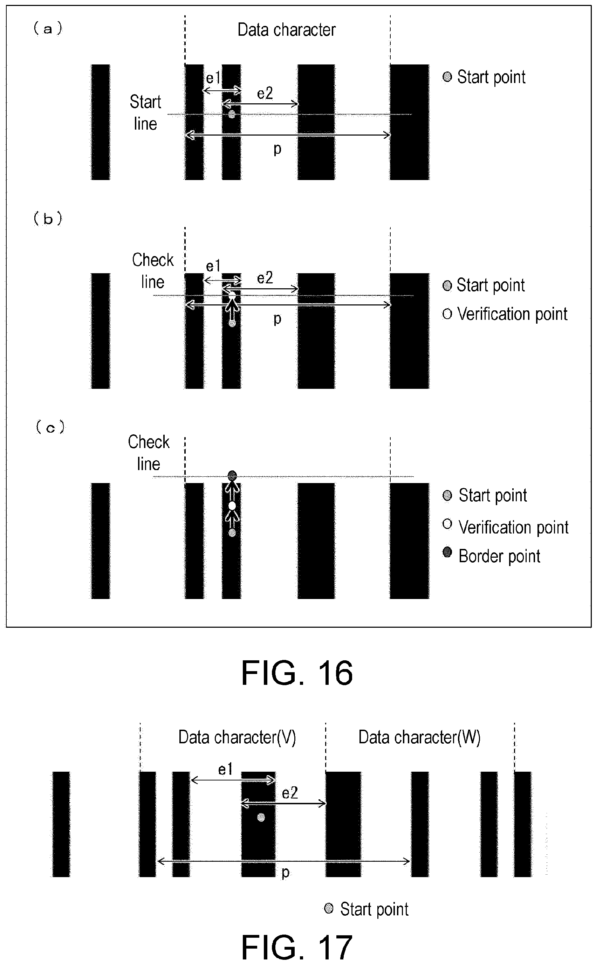

(a) to (c) of FIG. 16 are schematic diagrams illustrating an example of a flow of a process for identifying one border point candidate by using an element width ratio according to an embodiment of the invention.

tion.

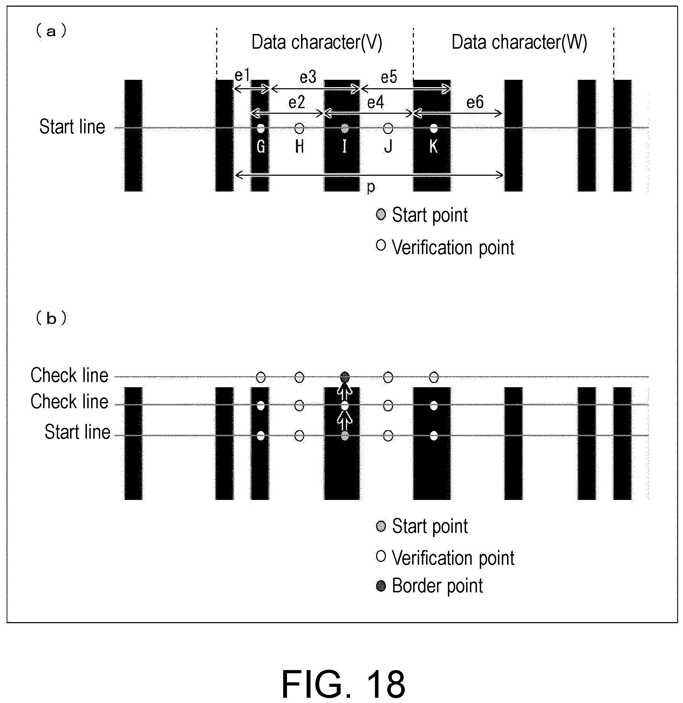

FIG. 17 is a schematic diagram illustrating identifying one border point candidate by using an element width ratio according to an embodiment of the invention. (a) and (b) of FIG. 18 are schematic diagrams illustrating an example of a flow of a process for identifying one border point candidate by using a ratio of a width of a set of multiple elements with respect to a predetermined width p according to an embodiment of the invention.

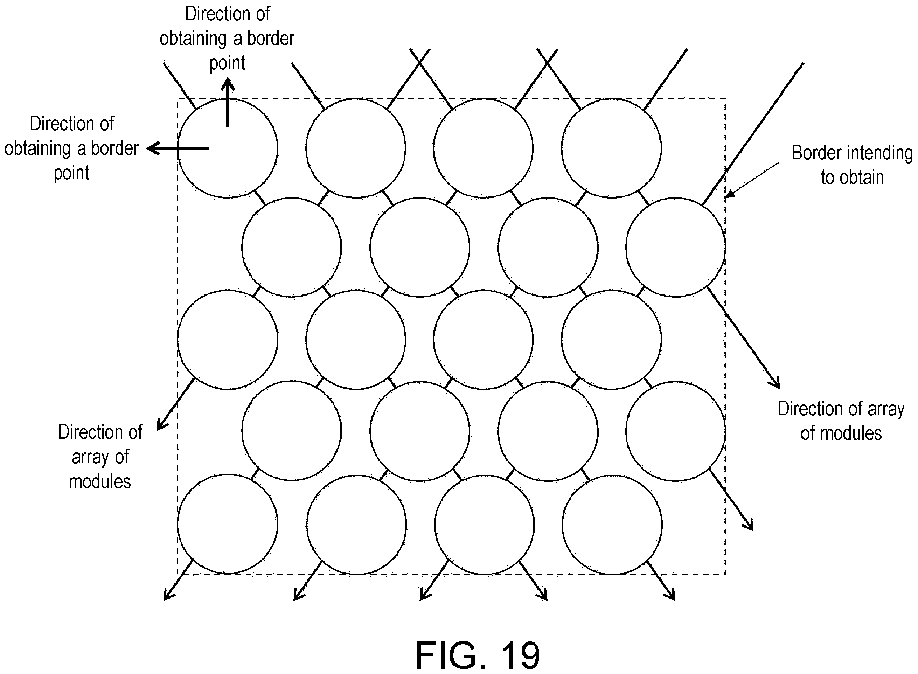

FIG. 19 is a diagram illustrating a modified example of a two-dimensional symbol whose border is identified by a symbol border identification device according to a modified example of the invention.

DESCRIPTION OF THE EMBODIMENTS

Hereinafter, the embodiments according to an aspect of the invention (hereinafter, also referred to as "the embodiment") will be described with reference to the drawings.

1. Application Example

FIG. 2 is a diagram illustrating an example of a symbol whose border is identified by a symbol border identification device 5 according to the embodiment. Firstly, an application example of the symbol border identification device 5 will be briefly described by using FIG. 2. The symbol shown in FIG. 2 is an example of a two-dimensional symbol. As shown in FIG. 2, the symbol is provided in a region R1 in the symbol border. In addition, text recognition regions R2 are provided to be adjacent to the region R1 within the border of the symbol. In the text recognition region R2, a test string is provided. For example, a symbol reading device 1 identifies the text recognition regions R2 from symbol borders, and performs a process for recognizing the text strings provided in the text recognition regions R2.

The symbol border identification device 5 is hardly susceptible to the influence of disturbing noise and identifies the border of the symbol in a short processing time. As described above, the disturbing noise includes, for example, dirt of a quiet zone provided on the outer side of the symbol, uneven printing, and noise at the edge of the symbol caused by printing on the casting surface, etc.

FIG. 3 illustrate examples of types of symbols whose borders are identified by the symbol border identification device 5. (a) of FIG. 3 illustrates an example of a one-dimensional symbol (e.g., code 39, code 128). (b) of FIG. 3 illustrates an example of a multi-row type two-dimensional symbol (e.g., microPDF417). (c) of FIG. 3 illustrates an example of a matrix type two-dimensional symbol (e.g., QR code (registered trademark)).

Here, (a) of FIG. 3 is used to described an example of a symbol configuration. The symbol is formed by multiple modules as minimum units. In the example shown in (a) of FIG. 3, the symbol is formed by modules m1 to m13. In addition, each module is either colored in a symbol color or a background color. In the example shown in (a) of FIG. 3, the modules m1, m3, m4, m8, m9, m11, and m13 are provided with a black symbol color. Meanwhile, the modules m2, m5, m6, m7, m10, and m12 are provided with a white background color.

Adjacent modules of the same color, for example, form an element which is a bar or a space, for example. In the example shown in (a) of FIG. 3, the modules m3 and m4 form one element (bar) E3. In addition, the modules m5, m6, and m7 form one element (space) m4. As shown in E1, E2, etc., in (a) of FIG. 3, in the case where the adjacent modules are not in the same color, each individual module forms one element.

(a) to (d) of FIG. 4 are diagrams illustrating other examples of types of symbols whose borders are identified by the symbol border identification device 5. (a) of FIG. 4 illustrates an example of a symbol in the case where the symbol color provided to the modules is black, the background color provided to the modules is white, and the periphery color of the periphery of the symbol is white. (b) of FIG. 4 illustrates an example of a symbol in the case where the symbol color provided to modules is black, the background color provided to the modules is white, and the periphery color of the periphery of the symbol is black, (c) of FIG. 4 illustrates an example of a symbol in the case where the symbol color provided to modules is black, the background color provided to modules is white, and the periphery color of the periphery of the symbol is white. (d) of FIG. 4 illustrates an example of a symbol in the case where the symbol color provided to modules is white, the background color provided to modules is black, and the periphery color of the periphery of the symbol is black. In the following descriptions, for the ease of description, a symbol in the case where the symbol color is black, the background color is white, and the periphery color of the periphery of the symbol is white is described. However, the pattern of the colors of the modules forming a symbol is not limited thereto.

The symbol border identification device 5 identifies reference positions of multiple elements forming the symbol by decoding the symbol included in an image. For example, the reference positions may be the centers of the modules forming the respective elements calculated from the edge points of the respective elements in the scan line used in a decoding process for the symbol.

In addition, the symbol border identification device 5 obtains profile information with respect to multiple regions set based on the reference positions and determines whether the regions are in the symbol. For example, the symbol border identification device 5 may scan within the element by sequentially setting the region and obtaining the profile information set from the center of the element toward the outside of the element.

The profile information may be a pixel value, a pixel value variation, binary data, and a width of the element, a normalized value of the width of the element (a ratio of the width of the element with respect to a predetermined width), etc.

The symbol border identification device 5 identifies at least one border element candidate by using the position information of the region determined as in the symbol, and identifies at least one border of the symbol based on the border element candidate.

According to the configuration, among the regions based on the reference position of the multiple elements identified by decoding the symbol, by using the position information of the region determined as in the symbol, at least one border of the symbol is identified.

That is, since the position information of the region determined as in the symbol is used, the identification of the border of the symbol can be less susceptible to the influence due to disturbing noise outside the symbol.

In addition, according to the above configuration, by decoding the symbol included in the image, the reference positions of the multiple elements forming the symbol are identified. That is, the border of the symbol can be identified by using the information obtained by the decoding process. Therefore, the processing time for identifying the symbol border can be reduced.

2. Configuration Example

(Symbol reading device 1)

FIG. 1 is a block diagram illustrating an example of the configuration of components of the symbol border identification device 5 according to an embodiment of the invention. In the embodiment, an example in which the symbol border identification device 5 is integrated with the symbol reading device 1 is shown. However, the symbol border identification device 5 may be separated from the symbol reading device 1.

The symbol reading device 1 shown in FIG. 1 includes a camera 2, an output part 3, a control part 4, and a storage part 58. In addition, the symbol border identification device 5 is formed by the configuration of a portion of the control part 4 and the storage part 58.

(Camera 2)

The camera 2 photographs the symbol. The camera 2 outputs photographed image data to an image acquisition part 51.

(Control part 4)

The control part 4 includes a central processing unit (CPU), a random access memory (RAM), a read only memory (ROM), etc., and performs control on the respective forming components in accordance with information processing. The control part 4 includes the image acquisition part 51, a decode part 52, a profile information identification part 53, a determination part 54, a border element identification part 55, a border identification part 56, a region identification part 57, and a text reading part 6. Among the configurations included in the control part 4, the image acquisition part 51, the decode part 52, the profile information identification part 53, the determination part 54, the border element identification part 55, the border identification part 56, and the region identification part 57 are the members forming the symbol border identification device 5.

(Image acquisition part 51)

The image acquisition part 51 acquires the image data in which the symbol is photographed and which is output from the camera 2, and outputs the image data to the decode part 52.

(Decode part 52)

The decode part 52 decodes the symbol photographed in the image data. The decode method of the symbol is not particularly limited as long as conventional technologies are properly used. The decode part 52 outputs a signal indicating the information which the decoded symbol has to a superordinate system 10 via the output part 3.

The superordinate system 10 controls the operation of the symbol reading device 1, and is a personal computer, a programmable controller, etc.

In addition, the decode part 52 identifies the reference positions of multiple elements forming the symbol by decoding the symbol included in the image.

The reference positions, for example, may be the edge points of the respective elements on the scan line used for the decoding process for the symbol, and may be calculated as the centers of the modules forming the respective elements from the edge points. For example, the respective centers of multiple modules included in one element may be calculated as the reference positions. The decode part 52 outputs a signal indicating the reference positions to the profile information identification part 53.

In addition, the decode part 52 may identify reference profile information 58 relating to multiple elements obtained from a decoding result. The decode part 52 stores the reference profile information 581 in the storage part 58.

According to the above configuration, the information obtained through the decoding process can be used in identifying the border of the symbol.

The reference profile information 581 includes, for example, at least one of the binary data of the pixel values of the respective elements or the binary data of the pixel values of the modules forming the respective elements on the scan line used in the symbol decoding process and the normalized values of the widths of the respective elements (the ratio of the width of each element with respect to the predetermined with).

In addition, the decode part 52 stores the image data 583 in which the symbol is photographed in the storage part 58.

According to the configuration, the symbol border identification device identifying the symbol border by using, as the reference profile information, one of the binary data obtained by the decoding process, the width of the element, and the normalized value of the width of the element can be realized.

In addition, the decode part 52 may obtain the reference profile information 581 by carrying out a filter process on the pixels within the range fitting with the module width of the module forming the element.

According to the configuration, the symbol border identification device identifying the symbol border by using the reference profile information 581 obtained from the pixels having undergone the filter process can be realized.

(Profile information identification part 53)

The profile information identification part 53 sets multiple regions based on the reference positions indicated in the signal input from the decode part 52.

Specifically, the profile information identification part 53 sets at least one of the shapes and the positions of the regions based on the reference direction determined by the array of the reference positions of the multiple elements identified by the decode part 52. The reference direction may be the direction of the scan line used in the decoding process for the symbol. In addition, the shape of the region may be one pixel, a line segment, or a rectangular shape. In addition, the specific example regarding the position will be described in detail in "Examples of Identifying Border Point Candidate" in the following.

According to the above configuration, the shape and the position of the region for which the determination on whether the region is in the symbol is performed can be set based on the scan line direction in the symbol decoding.

The profile information identification part 53 may set the region so that one region does not span across multiple elements.

According to the configuration, the symbol border identification device 5 setting a region that does not span across multiple elements, such as a region with an individual element as the target, and identifying the symbol border by using the region can be realized.

In addition, the profile information identification part 53 may set the region so that one region spans across multiple elements.

According to the configuration, the symbol border identification device 5 setting the region that spans across multiple elements, such as a region with multiple elements as the target, and identifying the symbol border by using the region can be realized. For example, it may be that a region with multiple elements as the target is set, and the symbol border of an individual element is identified by using the region.

In addition, the profile information identification part 53 obtains profile information with respect to the multiple regions. For example, the profile information identification part 53 may generate the profile information by using the image data 583 stored in the storage part 58.

The profile information includes, for example, at least one of a pixel value, a pixel value variation, binary data, and a width of an element.

According to the configuration, the symbol border identification device 5 identifying the symbol border by using at least one of a pixel value, a pixel value variation, binary data, and a width of the element can be realized.

In addition, the profile information may include a normalized value of the width of an element (the ratio of the width of an element with respect to the predetermined width).

The profile information identification part 53 outputs a signal indicating the position information of the region that is set and a signal indicating the profile information of the region to the determination part 54.

According to the configuration, the symbol border identification device identifying the symbol border by using the normalized value of the width of the element can be realized. The normalized value of the width of the element, for example, may be a ratio of the width of the element with respect to the width of the entire symbol or the width of the configuration of a portion of the symbol.

(determination part 54)

The determination part 54 determines whether the region identified by the profile information identification part 54 is in the symbol based on the input profile information.

For example, the determination part 54 may determine whether the region is in the symbol by matching the profile information with the reference profile information 581 stored in the storage part 58. For example, the determination part 54 may refer to determination information 582 indicating a threshold, etc., of a determination criteria stored in the storage part 58 and perform the determination.

In addition, the determination part 54 may individually determine whether each region is in the symbol with respect to each region set so as not to span across multiple elements.

The determination part 54 outputs a signal indicating the determination result with respect to each region and a signal indicating the position information of the region to the border element identification part 55.

In addition, when a region is determined as not in the symbol, the determination part 54 may instruct the profile information identification part 53 to end the region setting and end the generation of the profile information with respect to the region.

(Border element identification part 55)

The border element identification part 55 identifies at least one border element candidate in the symbol by using the position information of the region determined as in the symbol. The profile information identification part 53 may set the region and obtain the profile information sequentially from the reference position inside the element toward the outside, and the determination part 54 determines whether the region is in the symbol and perform scanning in the element.

In such configuration, in the case where a region is determined as in the symbol in the previous determination, a region is determined as not in the symbol, the position of the region determined as not in the symbol may be set as a border element candidate. Alternatively, in the case where a region is determined as in the symbol in the previous determination and a region is determined as not in the symbol in the current determination, the position of the region where the region is determined as in the symbol in the previous determination may be set as the border element candidate.

That is, in the configuration, the border element identification part 55 may set the position of the region that is set next and determined as not in the symbol as the border element candidate by referring to the position information of the region used in the previous determination and determined as in the symbol. In addition, the position of the region that is set previously and determined as in the symbol may be set as the border element candidate by referring to the position information of the region used in the next determination and determined as outside the symbol. The border element identification part 55 outputs a signal indicating the position of the border element candidate to the border identification part 56.

(Border Identification Part 56)

The border identification part 56 identifies at least one border of the symbol based on the border element candidate. The border identification part 56 outputs a signal indicating the identified border to the region identification part 57.

(Region identification part 57)

The image data may include a text string (optical reading medium), etc., separate from the symbol. The region identification part 57 identifies a region for recognizing a text string, etc., by referring to the border of the symbol that is identified. The border identification part 57 outputs a signal indicating the region in which recognition of the identified text string is performed to the text reading part 6.

According to the configuration, the influence of the disturbing noise with respect to the identification of the symbol border can be suppressed, and the region for recognizing the optical reading medium can be identified.

(Text reading part 6)

The text reading part 6 performs a text string recognition process in the region in which the recognition of the text string, etc., identified by the region identification part 57 is performed and reads the text. The text reading part 6 outputs a signal indicating the test string that is read to the superordinate system 10 via the output part 3.

(Output part 3)

The output part 3 outputs a signal to an external apparatus. Specifically in the embodiment, a signal indicating the text string read by the text reading part 6 and a signal indicating information which the symbol decoded by the decode part 52 has are output to the superordinate system 10.

(Storage part 58)

The storage part 58 is an auxiliary storage device such as a flash memory, a solid state drive, etc., and stores the reference profile information 581, the determination information 582, and the image data 583, etc.

3. Operation Example

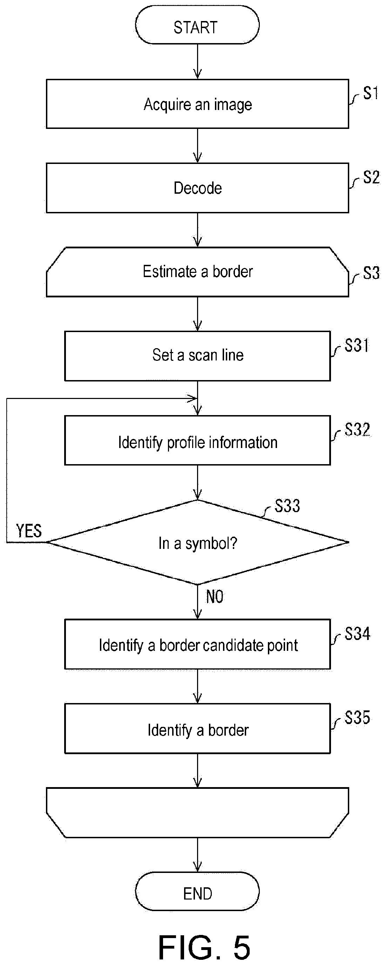

FIG. 5 is a flowchart illustrating an example of a flow of processes executed by the symbol border identification device 5. As shown in FIG. 5, for example, with the instruction from the superordinate system 11 as a trigger, the camera 2 photographs the symbol as the target, and the image acquisition part 51 acquires the image data (S1). Then, the decode part 52 decodes the symbol photographed in the image data (S2: decode step). In Step S2, the decode part 52 may identify the reference positions of multiple elements forming the symbol by decoding the symbol. Then, the process proceeds to a border estimation process (S3).

In the border estimation process (S3), the profile information identification part 53 sets a scanning line (S31).

(Example of Setting Scanning Line (Module Arrangement Direction))

FIG. 6 is a schematic diagram illustrating a method with which the profile information identification part sets the direction of the scanning line according to the embodiment. In the specification, the direction of the scanning line is referred to as a module (element) arrangement direction in the specification. As shown in FIG. 6, the profile information identification part 53 detects a point P1 at which the scan line used by the decode part 52 in symbol decoding intersects with the edge of an arbitrary element E (e.g., a bar). The profile information identification part 53 sequentially tracks the points on the edge of the element E by using the point P1 as a tracking start point. The profile information identification part 53 sets the tracking direction of the points on the edge of the target element as the module arrangement direction.
(a) to (d) of FIG. 7 are diagrams illustrating an example of the method with which the profile information identification part 53 sets the module arrangement direction according to the embodiment. An example of the specific method with which the profile information identification part 53 sets the module arrangement direction is described.

(I) As shown in (a) of FIG. 7, the profile information identification part 53 sets a a small region SR parallel to a scan line L at a position in a slight distance away from the tracking start point P1 in a vertical direction with respect to the scan line L. The slight distance may be a fixed value such as one pixel, and may be a variable value in accordance with module size such as 0.5 module.
(II) Then, as shown in (b) of FIG. 7, the profile information identification part 53 detects an edge point P2 of the element E from the inside of the symbol toward the outside (the direction indicated by the arrow in (b) of FIG. 7) in the small region SR that is set. For example, in the case where the symbol color is black and the background color is white, the profile information identification part 53 may detect the position where the pixel is switched from black to white as the edge point.
(III) Then, as shown in (c) of FIG. 7, the profile information identification part 53 sets a a small region SR2 parallel to the scan line L at a position in a slight distance away from the edge point P2 in the vertical direction with respect to the scan line L. Like (II), the profile information identification part 53 detects the next edge point of the element E.
(IV) Then, the profile information identification part 53 repeats the same process as in (III) until it cannot detect an edge point. The profile information identification part 53 sets the edge point that is lastly detected as a tracking end point. The profile information identification part 53 sets the direction of the line passing through the tracking start point and the tracking end point as the module arrangement direction.

For example, the profile information identification part 53 sets the scanning line of the module arrangement direction in the element as the target. The profile information identification part 53 may set the scanning line so as to pass through the central positions of the modules forming the respective elements which are calculated from the edge points of the elements on the scan line used in the decoding process of the symbol.
Following S31, the profile information identification part 53 identifies the profile information of the region set based on the reference position (S32: profile information identification step). For example, the profile information identification part 53 sequentially setting the region and identifying the profile information from the inside of the element to the outside of the element. The profile information identification part 53 sets the region along the scan line. Then, based on the profile information, the determination part 54 determines whether the region is in the symbol (S33: determination step). In the case where the determination part 54 determines that the region is not in the symbol (NO in S33), the border element identification part 55 identifies at least one border element candidate by using the position information of the region determined as in the symbol (S34: border element identification step). Then, the border identification part 56 identifies at least one border of the symbol (S35: border identification step) based on the border element candidate. In the case where the determination part 54 determines that the region is in the symbol (YES in S33), the process returns to S32.

For example, the border identification part 56 may obtain the four sides of the border of the symbol by using straight line approximation or curve approximation. In the configuration, the border identification part 56 may set the intersections of straight lines, etc., as the four corners of the border of the symbol. In addition, the border identification part 56 may identify each border (side) so as to include multiple element candidates.

(Examples of Identifying Border Point Candidate)

In the following, specific examples of the process from setting a region by the profile information identification part 53 to identifying a border element candidate (border point candidate) by the border element identification part 55 will be described.

The scanning direction and the scanning line used in the following examples may be the direction of the scanning line generated in "Example of Setting Scanning Line (Module Arrangement Direction)" above and the scanning line.

(Example 1 of Identifying Border Point Candidate)

(a) of FIG. 8 is a schematic diagram of an example for identifying a border point candidate. In the example, the reference position is set at a central point P0 of the element or the module on the scan line L used in symbol decoding by the decoding part 52. The profile information identification part 53 sets the central point P0 as the start point, and acquires pixel values (brightness values) of pixels (regions) from the image data 583 along D1 which is the module arrangement direction. That is, the profile information identification part 53 acquires pixel values from the inside to the outside of the element as the profile information.

(b) of FIG. 8 is a graph illustrating an example of the brightness values acquired by the profile information identification part 53. The vertical axis of the graph indicates the brightness value, and the horizontal axis indicates the distance from the start point. As shown in (b) of FIG. 8, the brightness values (pixel values) of the pixels within a predetermined distance from the start point which are located in the element are constant. The pixel at the position exceeding the predetermined distance from the start point is located outside the element. Therefore, the brightness values (pixel values) of the pixels located outside the element are switched from the brightness values (pixel values) of the pixels in the predetermined distance within the element.

(c) of FIG. 8 is a graph illustrating an example of the differential values of the brightness values acquired by the profile information identification part 53. The vertical axis of the graph indicates the differential value of the brightness value, and the horizontal axis indicates the distance from the start point. As shown in (c) of FIG. 8, at the position exceeding the predetermined distance from the start point, that is, at the position where the pixel is outside the element, the differential value of the brightness value reaches the extreme value. The determination part 54 may determine whether each pixel is in the symbol by using the extreme value (variation of pixel values). In addition, the border element identification part 55 may identify the pixel whose differential value of the brightness value reaches the extreme value as the border point candidate.

(d) of FIG. 8 is a graph illustrating an example of binary data of the brightness values (pixel values) acquired by the profile information identification part 53. The vertical axis of the graph indicates the binary value of the brightness value, and the horizontal axis indicates the distance from the start point. As shown in (d) of FIG. 8, the binary values of the pixels within the predetermined distance from the start point which are located in the element are constant. The pixel at the position exceeding the predetermined distance from the start point is located outside the element. Therefore, the binary values of the pixels located outside the element are switched from the binary values of the pixels in the predetermined distance inside the element. The profile information identification part 53 may generate the binary data as the profile information. The determination part 54 may determine whether each pixel is in the symbol by referring to the position where the values of the binary data are switched. In addition, the border element identification part 55 may identify the pixel located right before the switching of the values of the binary data or the pixel located right after the switching of the values of the binary data as the border point (border point candidate).

The pixel values acquired by the profile information identification part 53 may be pixel values smoothed by using a smoothing filter.

Specifically, the profile information identification part 53 performs a filter process using a space filter having a kernel size fitting with the module width of the module forming the element with respect to the image including the region set based on the reference position. Then, the profile information identification part 53 may obtain the profile information by using pixel values extracted from the image to which the filter process is applied.

In other words, the pixel values acquired by the profile information identification part 53 may be pixel values having undergone a process by a filter possessing a kernel size fitting with the module size. Examples of such filter include filters (smoothing, Gaussian, etc.) with an arbitrary weight or a median filter, a maximum/minimum filter, etc. In addition, the profile information identification part 53 may set the kernel size of the filter as the shape of the region. The kernel size may be set as the lateral length with respect to the arrangement direction of the module.

According to the configuration, the symbol border identification device identifying the symbol border by using profile information obtained from the image having undergone the filter process can be realized.

(a) to (d) of FIG. 9 are schematic diagrams illustrating a flow of a process for individually identifying multiple border points in the example. As shown in (a) of FIG. 9, in Step 1 of the example, the profile information identification part 53 sets multiple start points in the direction in which the modules are arrayed. The direction in which the modules are arrayed is, for example, the direction of the scan line used in decoding of the symbol. Then, as shown in (b) of FIG. 9, in Step 2 of the example, the determination part 54 determines whether the identified region is in the symbol from one start point along the scanning direction, and detects a border point from the position information of the region on which the border element identification part 55 performs determination. Then, as shown in (c) of FIG. 9, in Step 3 of the example, the border element identification part 55 detects a border point from a separate start point along the scanning direction. The example shown in (c) of FIG. 9 illustrates a case where the element at which the start point is set is a space and a border point is not detected. For example, in the case where a border point cannot be detected in the scanning within the predetermined distance from the start point, the border element identification part 55 may be configured to end the detection of the border point setting the start point as the reference position.

Then, as shown in (d) of FIG. 9, in Step 4 of the example, the border element identification part 55 detects the border points one after another from the remaining start points that are set along the scanning direction .

(Example 2 of Identifying Border Point Candidate)

Then, an example of simultaneously identifying multiple border points is described.

(a) of FIG. 10 and (a) of FIG. 11 schematically illustrate an example for identifying a border point candidate according to the example. In the example, the reference positions are set at the central points of the modules or the elements on the scan line L used in symbol decoding by the decode part 52. As shown in (a) of FIG.

10 and (a) of FIG. 11, the profile information identification part 53 sets the reference positions on a start line as the start points. The profile information identification part 53 acquires the brightness values (pixel values) along the module arrangement direction and generates binary data (profile information) of the brightness values.

(b) of FIG. 10 is a graph illustrating an example of the brightness values acquired by the profile information identification part 53 in the case where the center of the module with a module color is set as the start point. The vertical axis of the graph indicates the brightness value, and the horizontal axis indicates the distance from the start point.

(b) of FIG. 11 is a graph illustrating the brightness value of each start point (1 to 5) in the start points (the positions of A of the module arrangement direction) on the scan line L shown in (a) of FIG. 11.

(c) of FIG. 10 is a graph in which the brightness values shown in the graph of (b) of FIG. 10 are converted into binary data. The vertical axis indicates the binary value of the brightness value, and the horizontal axis indicates the distance from the start point.

(c) of FIG. 11 is a graph in which the brightness values shown in the graph of (b) of FIG. 11 are converted into binary data. The vertical axis indicates the binary values of the brightness values, and the horizontal axis indicates the positions of the start points (1 to 5) on the scan line L.

As shown in (c) of FIG. 10, the binary values of the pixels within the predetermined distance from the start point located in the element are constant. The pixel at the position exceeding the predetermined distance from the start point is located outside the element. Therefore, the binary values of the pixels located outside the element are switched from the binary values of the pixels within the predetermined distance inside the element. That is, in the case where the center of the module with the module color (e.g., black) is set as the start point, the value of the binary data (value of black) at the start point is different from the value of the binary data (value of white) indicated by a pixel located outside the element.

The determination part 54 performs matching between the pattern of the binary data (profile information) of the pixel values of the multiple pixels (regions) set based on the multiple start points and the pattern of the binary data (reference profile information) of the pixel values at the multiple start points. In the case where the consistency rate between the two patterns of the binary data is lower than a predetermined threshold, the determination part 54 determines that the multiple pixels (regions) that are set are not in the symbol. The predetermined threshold may be stored as the determination information 582 in the storage part 58.

For example, as shown in (a) of FIG. 11, the binary data of the pixels at the positions 1 to 5 in the scan line direction of the scan line L (position A along the module arrangement direction) show a pattern of black, white, black, black, and white. Meanwhile, the binary data of the pixels at the positions 1 to 5 in the scan line direction at the position D along the module arrangement direction, which are located outside the symbol, show a pattern of white, white, white, white, and white. That is, in the case where the pattern of the binary data of the pixel values of the multiple pixels (regions) set based on the multiple start points are different from the pattern of the binary data of the pixel values at the multiple start points, the chance that the multiple pixels are located outside the symbol is high. Therefore, for example, the border element identification part 55 identifies the pixels indicating the pattern whose consistency rate is low as the border point.

(a) to (c) of FIG. 12 are schematic diagrams illustrating a flow of a process for simultaneously identifying multiple border points in the example. As shown in (a) of FIG. 12, in Step 1 of the example, the profile information identification part 53 sets multiple start points on the start line in the direction in which the modules are arrayed. The start line, for example, is the scan line used for decoding the symbol.

Then, as shown in (b) of FIG. 12, in Step 2 of the example, the determination part 54 determines whether verification points arrayed on a check line set in parallel with the start line and at the positions along the scanning direction from the respective start points are in the symbol. The determination part 54 performs matching between the pattern of the binary data of the pixel values of the verification points set based on the multiple start points and the pattern of the binary data of the pixel values at the multiple start points. The profile information identification part 53 sequentially sets the check line (region) and the verification points (regions) from the inside to the outside of the symbol from the start line.

As shown in (c) of FIG. 12, in Step 3 of the example, in the case where the consistency rate between the two patterns of the binary data is lower than a predetermined threshold, the determination part 54 determines that the multiple verification points that are set are not in the symbol. The border element identification part 55 identifies the pixels indicating a pattern whose consistency rate is lower than a predetermined value as the border points. Or, the border element identification part 55 may identify, as the border points, the pixels located at multiple verification points indicating a pattern whose consistency rate is higher than the predetermined value and set right before multiple verification points indicating a pattern whose consistency rate is lower than the predetermined value.

According to the configuration, the border points can be identified by using the binary data of the pixels scanned from the multiple start points. Therefore, even in the case where the pixel values of some pixels are not values reflecting values inside and outside the symbol due to dirt at a local position, etc., correct border point candidates can still be detected.

(Example 3 of Identifying Border Point Candidate)

In the following, an example in which one border point candidate is identified from multiple verification points arrayed in the scan line direction is described.

(a) to (e) of FIG. 13 are schematic diagrams illustrating a flow of a process for identifying one border point candidate from multiple verification points arrayed in the scan line direction according to the example. In the example, the reference positions are set at the central points of the modules or the elements on the scan line L used in symbol decoding by the decode part 52. As shown in (a) of FIG. 13, in Step 1 of the example, the profile information identification part 53 sets multiple reference positions on the start line as the start points. The start line, for example, is the scan line used for decoding the symbol.

Then, as shown in (b) of FIG. 13, in Step 2 of the example, the profile information identification part 53 sets, with respect to one start point, verification start points (verification points) in one or more modules within a predetermined range from the module in which the start point is set. The verification start points are set to be arrayed on the start line.

Then, as shown in (c) of FIG. 13, in Step 3 of the example, the determination part 54 determines whether the verification points which are arrayed on the check line set in parallel with the start line and at the positions along the scanning direction from the start point and the verification start point are in the symbol. For example, the determination part 54 performs matching between the pattern of the binary data (profile information) of the pixel values of the verification points and the pattern of the binary data (reference profile information) of the pixel values at the start point and the one or more verification start points. Regarding the matching of the patterns, the method described in "Example 2 of Identifying Border Point Candidate" above can be applied.

Then, as shown in (d) of FIG. 13, in Step 4 of the example, in the case where the consistency rate between the two patterns of the binary data is lower than the predetermined threshold, the border element identification part 55 identifies one verification point at the position in the scanning direction from the start point as the border point.

Then, as shown in (e) of FIG. 13, for other start points, border points are identified in a similar manner by using the method.

There is also a case where the scan line used by the decode part 52 to decode the symbol is not perpendicular to the module arrangement direction. In such case, the border line of the symbol is not parallel to the scan line. Therefore, at the verification points set based on the verification line set to cross the border line of the symbol, there is a chance that those present in the symbol and those present outside the symbol are mixed.

According to the configuration, the verification start points are set in one or more modules within a predetermined range from the modules in which the start points are set. Therefore, the chance that, in the verification points, those present in the symbol and those present outside the symbol are mixed is reduced. That is, the border point can be identified accurately.

(Example 4 of Identifying Border Point Candidate)

Then, an example in which a border point candidate is identified by using the width of an element in the direction of the scan line used in decoding of the symbol is described.

(a) to (c) of FIG. 14 are schematic diagrams illustrating a flow of a process for identifying a border point candidate by using the width of an element in the scan line direction in the example. In the example, the reference position is set as the central point of the module or the element on the scan line L used in symbol decoding by the decode part 52. As shown in (a) of FIG. 14, firstly, the profile information identification part 53 sets the reference position on the start line with respect to the target element as the start point. The start line, for example, is the scan line used for decoding the symbol.

Then, as shown in (b) of FIG. 14, the determination part 54 determines whether the verification point on the check line set in parallel with the start line and at the position along the scanning direction from the start point is in the symbol. For example, the determination part 54 performs matching between a width w (profile information) of the element at the verification point and a width w0 (reference profile information) of the element at the start point.

For example, the width w0 of the element at the start point may be a distance between two adjacent element edge points on the scan line used in decoding of the symbol. In addition, the width w0 of the element at the start point may be a run-length in which the same value remains in the binary data on the scan line. In addition, the width w of the element at the verification point may be a run-length which includes the data of the position of the verification point and in which the same value remains in the binary data on the check line.

In the case where the consistency rate between the width w of the element at the verification point and the width w0 of the element at the start point is lower than a predetermined threshold, the determination part 54 determines that the verification point that is set is not in the symbol. The predetermined threshold may be stored as the determination information 582 in the storage part 58. For example, if the width w at the verification point is within a range from 80% to 120% of the width w0 at the start point, the determination part 54 determines that the verification point is in the symbol. The profile information identification part 53 sequentially sets the check lines and the verification points from the inside to the outside of the symbol from the start line.

Then, as shown in (c) of FIG. 14, in the case where the width of the element at the verification point cannot be obtained, the determination part 54 determines that the verification point is outside the symbol. In addition, in the case where the consistency rate between the width w of the element at the verification point and the width w0 of the element at the start point is lower than the predetermined threshold, the determination part 54 determines that the verification point is outside the symbol. The border element identification part 55 identifies the verification point determined as outside the symbol as the border point.

(Example 5 of Identifying Border Point Candidate)

Then, an example in which a border point candidate is identified by using the widths of multiple elements in the direction of the scan line used in decoding of the symbol is described.

(a) and (b) of FIG. 15 are schematic diagrams illustrating a flow of a process for identifying one border point candidate by using the widths of multiple elements in the scan line direction in the example. In the example, the reference position is set as the central point of an element or a module on the scan line used in symbol decoding by the decode part 52. As shown in (a) of FIG. 15, the profile information identification part 53 sets the reference position on the start line as the start point. The start line, for example, is the scan line used for decoding the symbol. Then, for example, the profile information identification part 53 sets, with respect to one start point, verification start points (verification points) in one or more elements within a predetermined range from the element in which the start point is set. The verification start points are set to be arrayed on the start line.

Then, as shown in (b) of FIG. 15, the determination part 54 determines whether the verification points set on the check line set in parallel with the start line and at the positions along the scanning direction from the start point or the verification start points are in the symbol.

For example, the determination part 54 performs matching between the width (profile information) of the element at the verification point and widths w1 to w5 (reference profile information) of the element at the corresponding start point or the corresponding verification start points. The corresponding start point or the corresponding verification start points are the start point or the verification start points located on the scanning lines of the respective verification points. The profile information identification part 53 sequentially sets the check lines and the verification points from the inside to the outside of the symbol from the start line.

The determination part 54, for each check line, calculates the number of verification points where the width of the element at the verification point is not obtained or where the consistency rate between the width of the element at the verification point and the width of the element at the corresponding start point or the corresponding verification start point is low. When the number of the calculated verification points on one check line exceeds a threshold, the determination part 54 determines that the verification points included in the check line and at the positions along the scanning direction from the start point are outside the symbol. The threshold may be included in the determination information 582 stored in the storage part 58. In addition, the widths of the element at the start point, the verification start points, and the verification points are the same as the widths of the elements at the start point and the verification points described in "Example 4 of Identifying Border Point Candidate". The border element identification part 55 identifies the verification point determined as outside the symbol as the border point.

(Example 6 of Identifying Border Point Candidate)

An example in which one border point candidate is identified by using a ratio (normalized value) of the width of a set of elements in the direction of the scan line used in decoding of the symbol is described.

(a) to (c) of FIG. 16 are schematic diagrams illustrating a flow of a process for identifying one border point candidate by using a ratio of the element width in the scan line direction used in decoding of the symbol in the example. In the example, the reference position is set as the central point of an element or a module on the scan line used in symbol decoding by the decode part 52. In addition, for the example, an instance in which an element as the target and an element adjacent to the target element are arranged as a set, and a ratio of the width of the set with respect to a width p of a data character is used to identify the border point candidate is described.

In (a) of FIG. 16, as the target element, the second bar from the left in the data character is shown. The profile information identification part 53 sets the reference position on the start line as the start point. The start line, for example, is the scan line used for decoding the symbol. Since the decoding of the symbol has been completed, the array of bars (B) and spaces (S) forming the data character shown in FIG. 16 and the number of modules forming the respective elements can be obtained as (B,S,B,S,B,S) = (1,1,1,3,2,3).

Then, the width of the set of the target element and the element adjacent on the left of the element is two modules. The number of modules forming the entire data character is 11 modules. Therefore, the ratio between the width p (11 modules) of the data character and a width e1 of the set of the target element and the element adjacent on the left of the element is p:e1 = 11:2.

Then, the width of the set of the target element and the element adjacent on the right of the element is four modules. The number of modules forming the data character is 11 modules. Therefore, the ratio between the width of the data character and a width e2 of the set of the target element and the element adjacent on the left of the element is p:e2 = 11:4.

Therefore, the following formulae (reference profile information) on the start line are satisfied.

$$1.5/11 \leqq e1/p < 2.5/11$$

$$3.5/11 \leqq e2/p < 4.5/11$$

Then, as shown in (b) of FIG. 16, the determination part 54 determines whether the verification point set on the check line set in parallel with the start line and at the position along the scanning direction from the start point is in the symbol.

For example, regarding the ratios e1/p and e2/p of the widths on the check line (profile information), the determination part 54 determines whether the verification point on the check line is in the symbol based on whether the following formulae are satisfied. In the case where the following formulae are satisfied, the verification point on the check line is determined as in the symbol.

$$1.5/11 \leqq e1/p < 2.5/11$$

$$3.5/11 \leqq e2/p < 4.5/11$$

It should be noted that the width of each element on the check line may be a distance between two adjacent element edge points on the check line. In addition, the width of each element may be a run-length in which the same value remains in the binary data on the check line. In addition, the width of each element may be calculated by making the pixel where the differential value of the pixel value (brightness value) is the extreme value on the check line as the edge of the element.

The profile information identification part 53 sequentially sets the check lines and the verification points from the inside to the outside of the symbol from the start line.

Then, as shown in (c) of FIG. 16, regarding the ratios e1/p and e2/p of the widths on the check line, the determination part 54 determines that the verification point is outside the symbol when at least one of the above formulae is not satisfied. The border element identification part 55 identifies the verification point determined as outside the symbol as the border point.

(Example 7 of Identifying Border Point Candidate)

Then, another example in which one border point candidate is identified by using a ratio (normalized value) of the width of a set of elements in the direction of the scan line used in decoding of the symbol is described.

For the example, an instance in which an element as the target and an element adjacent to the target element are arranged as a set, and a ratio of the width of the set with respect to the predetermined width p is used to identify the border point candidate is described. The difference of the present example from "Example 6 of Identifying Border Point Candidate" is that the predetermined with p is not the width of the data character but an arbitrary width.

FIG. 17 is a schematic diagram illustrating identifying one border point candidate by using the ratio of the width of the elements in the direction of the scan line used in decoding of the symbol in the example.

As shown in FIG. 17, the arbitrary width p is set across different data characters. The arbitrary width p shown in FIG. 17 is the width of seven elements, and the number of modules forming the respective elements and the array of bars (B) and spaces (S) can be obtained by (S,B,S,B,S,B,S)= (1,1,3,2,3,2,3).

Then, the width of the set of the target element and the element adjacent on the left of the element is five modules. The number of modules forming the arbitrary width p is 15 modules. Therefore, the ratio between the arbitrary width p (15 modules) and the width e1 of the set of the target element and the element adjacent on the left of the element is p:e1 = 15:5.

Then, the width of the set of the target element and the element adjacent on the right of the element is five modules. The number of modules forming the arbitrary width p is 15 modules. Therefore, the ratio between the arbitrary width p and the width e2 of the set of the target element and the element adjacent on the left of the element is p:e1 = 15:5.

Therefore, the following formulae (reference profile information) on the start line are satisfied.

$$4.5/15 \leqq e1/p < 5.5/15$$

$$4.5/15 \leqq e2/p < 5.5/15$$

For example, regarding the ratios e1/p and e2/p of the widths on the check line (profile information), the determination part 54 determines whether the verification point on the check line is in the symbol based on whether the above formulae are satisfied.

In addition, instead of making the target element and the element adjacent to the target element a set, a ratio between the predetermined width p and a width e of the target element may be used for performing a determination. For example, in the example shown in FIG. 17, the fourth bar from the left is formed by two modules. In the case where the border point candidate is identified by using a ratio e/p of the width e of the fourth bar from the left with respect to the arbitrary width p, the determination part 54 determines whether the verification point on the check line is in the symbol based on whether the following formula is satisfied with regard to the ratio e/p of the width of the bar on the check line.

$$1.5/15 \leqq e/p < 2.5/15$$

(Example 8 of Identifying Border Point Candidate)

Then, an example in which one border point candidate is identified by using a ratio of the width of a set of multiple elements.

(a) and (b) of FIG. 18 are schematic diagrams illustrating a flow of a process for identifying one border point candidate by using a ratio of the width of a set of multiple elements with respect to the predetermined width p in the example. In the example, the reference position is set as the central point of an element or a module on the scan line used in symbol decoding by the decode part 52. As shown in (a) of FIG. 18, the profile information identification part 53 sets the reference position on the start line as the start point. The start line, for example, is the scan line used for decoding the symbol. Then, for example, the profile information identification part 53 sets, with respect to one start point, verification start points (verification points) in one or more elements within a predetermined range from the element in which the start point is set. The verification start points are set to be arrayed on the start line.

Then, as shown in (b) of FIG. 18, the determination part 54 determines whether the verification points set on the check line set in parallel with the start line and at the positions along the scanning direction from the start point or the verification start points are in the symbol.

For example, as shown in (b) of FIG. 18, regarding the verification point set at the position along the scanning direction from a verification start point G, the determination part 54 determines whether the verification point is in the symbol by using the following two width ratios in the check line including the verification point. The ratios are e1/p, which is a ratio of the width e1 of the element including the verification start point G and the element adjacent on the left of the element with respect to the predetermined width P, and e2/p, which is a ratio of the width e2 of the element including the verification start point G and the element adjacent on the right of the element with respect to the predetermined width P.

Similarly, regarding the verification point set at the position along the scanning direction from a verification start point H, whether the verification point is in the symbol is determined by using e2/p and e3/p, which are the ratios of the widths (e2, e3) with respect to the predetermined width P.

Similarly, regarding the verification point set at the position along the scanning direction from a start point I, whether the verification point is in the symbol is determined by using e3/p and e4/p, which are the ratios of the widths (e3, e4) with respect to the predetermined width P.

Similarly, regarding the verification point set at the position along the scanning direction from a verification start point J, whether the verification point is in the symbol is determined by using e4/p and e5/p, which are the ratios of the widths (e4, e5) with respect to the predetermined width P.

Similarly, regarding the verification point set at the position along the scanning direction from a verification start point K, whether the verification point is in the symbol is determined by using e5/p and e6/p, which are the ratios of the widths (e5, e6) with respect to the predetermined width P.

In the determination on whether each verification point on the check line is in the symbol, since the remaining points are the same as "Example 8 of Identifying Border Point Candidate" above, the descriptions will not be repeated here.

The profile information identification part 53 sequentially sets the check lines and the verification points from the inside to the outside of the symbol from the start line.

When the number of the verification points determined as outside the symbol on one check line exceeds a threshold, the determining part 54 determines the verification points included in the check line and at the positions along the scanning direction from the start point as outside the symbol. The threshold may be included in the determination information 582 stored in the storage part 58.

4. Modified Example

The modified example of the embodiment will be described in the following. For the ease of description, the components having the same functions as those of the components described in the above embodiment are labeled with the same symbols and will not be repeated in the following.

The symbol border identification device 5 according to the modified example identifies the border of a two-dimensional symbol in which multiple elements are arranged in two dimensions.

FIG. 19 is a diagram illustrating an example of a two-dimensional symbol whose border is identified by the symbol border identification device 5 according to the modified example. FIG. 19 illustrates an example of a dot code.

As shown in FIG. 19, the profile information identification part 53 according to the modified example may obtain the profile information with respect to multiple region set based on the reference positions of multiple elements arrayed on the outermost side in the two-dimensional symbol.

According to the configuration, the symbol border identification device 5 capable of identifying the symbol border in the two-dimensional symbol can be realized.

[Example of Realizing by Software]

The symbol reading device 1 and the control program (the control part 4) (particularly the image acquisition part 51, the decode part 52, the profile information identification part 53, the determination part 54, the border element identification part 55, the border identification part 56, the region identification part 57, the text reading part 6) may be realized by logic circuits (hardware) formed by integrated circuits (IC chips), etc., and may be realized by software.

In the latter case, the symbol reading device 1 and the symbol border identification device 5 are provided with a computer executing the commands of the program as the software for realizing the respective functions. The computer includes, for example, one or more processors and includes a computer readable recording medium storing the program. In addition, in the computer, the processor reads the program from the recording medium and executes the program, thereby achieving the objective of the invention. As the processor, a central processing unit (CPU), for example, can be used. As the recording medium, a "non-transient, tangible computer-readable medium", such as a read only memory (ROM), etc., a tape, a disk, a card, a semiconductor memory, a programmable logic circuit, etc., can be used. In addition, a random access memory (RAM), etc., for expanding the program may be provided. In addition, the program may be supplied to the computer via any transmission medium (communication network, broadcast waves, etc.) able to transmit the program. An aspect of the invention may be realized in the form of data signals embedded in carrier waves, in which the program is embodied by electronic transmission.

The invention is not limited to the above-described embodiments, and various modifications can be made within the scope of the claims. The technical scope of the invention also includes embodiments obtained by appropriately combining the technical means disclosed in the different embodiments.

[Description of Reference Symbols]

5: Symbol border identification device;
52: Decode part;
53: Profile information identification part;
54: determination part;
55: Border element identification part;
56: Border identification part;
57: Region identification part;
S2: Decode Step;
S32: Profile Information Identification Step;
S33: Determination Step;
S34: Border Element Identification Step;
S35: Border Identification Step.

**Claims**

**1.** A symbol border identification device (5), comprising:

an image acquisition device configured to acquire image data in which a symbol is photographed;

**characterized in that** the symbol border identification device further comprises:

a memory configured to store at least reference profile information (581) relating to a plurality of elements (E) that form the symbol as a reference;

a decode part (52), configured to identify the symbol comprised in the image to identify reference positions of a plurality of elements (E) by decoding the symbol comprised in an image, wherein the plurality of elements (E) is arranged in an element arrangement direction;

a profile information identification part (53), configured to obtain profile information with respect to a plurality of regions (SR) set based on the reference positions, set the element arrangement direction that is across the plurality of elements, and detect a first edge point as a tracking start point at which a scan line that is across the plurality of elements and used by the decode part in symbol decoding intersects with an edge of an element, wherein each of the plurality of regions is parallel with the scanning line, wherein the profile information relates the element (E) with respect to the plurality of regions (SR);

a determination part (54), configured to determine whether the regions are in the symbol based on the profile information by matching the profile information with the reference profile information;

a border element identification part (55), configured to identify at least one border element candidate by using position information of the regions determined as in the symbol, wherein the border element identification part (55) is configured to set a position of the region (SR) that is set next and determined as not in the symbol as the border element candidate by referring to the position information of the region (SR) used in a previous determination and determined as in the symbol; and

a border identification part (56), configured to identify at least one border of the symbol based on the border element candidate, wherein the border identification part (56) is further configured to scan within each of the plurality of elements by sequentially setting the plurality of regions, to detect a second tracking point and the border identification part (56) is configured to detect and set a second edge point on the edge of an element when the second edge point is from an inside of the symbol toward an outside until no edge point is detected,

the border identification part (56) is configured to set an end edge point that is lastly detected as a tracking end point, and

the border identification part (56) is configured to set a direction of a line passing through the tracking start point and the tracking end point as a module arrangement direction (D1).

2. The symbol border identification device (5) as claimed in claim 1, wherein the decode part (52) is further configured to identify reference profile information relating to the elements obtained from a decoding result,

3. The symbol border identification device (5) as claimed in claim 1 or 2, wherein the profile information identification part (53) is configured to set at least one of shapes and positions of the regions based on a reference direction determined by an array of the reference positions of the elements identified by the decode part (52).

4. The symbol border identification device (5) as claimed in any one of claims 1 to 3, wherein the profile information identification part (53) is configured to set the regions so that one region of the regions does not span across the elements, and the determination part (54) is configured to individually determine whether each of the regions is in the symbol.

5. The symbol border identification device (5) as claimed in claim 2, wherein the profile information identification part (53) is configured to set the regions so that one region of the regions spans across the elements.

6. The symbol border identification device (5) as claimed in any one of claims 1 to 5, wherein the profile information comprises at least one of a pixel value, a pixel value variation, binary data, and a width of the element.

7. The symbol border identification device (5) as claimed in claim 5, wherein the profile information comprises a normalized value of a width of the element.

8. The symbol border identification device (5) as claimed in claim 2 or 5, wherein the reference profile information comprises at least one of binary data, a width of the element, and a normalized value of the width of the element.

9. The symbol border identification device (5) as claimed in claim 6 or 7, wherein the profile information identification part (53) performs, with respect to an image comprising the regions, a filter process using a space filter having a kernel size fitting with a module width of a module forming the element, and obtains the profile information by using pixel values extracted from the image to which the filter process is applied.

10. The symbol border identification device (5) as claimed in any one of claims 1 to 9, wherein the symbol is a two-dimensional symbol in which the elements are arranged in two dimensions, and the profile information identification part (53) is configured to obtain the profile information with respect to the regions set based on the reference positions of the elements arrayed on an outermost side in the symbol.

11. The symbol border identification device (5) as claimed in any one of claims 1 to 10, wherein the image comprises an optical reading medium separate from the symbol, and the symbol border identification device (5) comprises a region identification part identifying a region in which recognition of the optical reading medium is performed with reference to the border of the symbol that is identified.

12. A symbol border identification method, comprising:

   an acquisition step, acquiring image data in which a symbol is photographed;
   a storing step, storing in a memory at least reference profile information (581) relating to a plurality of elements (E) that form the symbol as a reference;
   a decode step, identifying the symbol comprised in the image to identify reference positions of a plurality of elements (E) by decoding the symbol comprised in an image, wherein the plurality of elements (E) is arranged in an element arrangement direction;
   a profile information identification step, obtaining profile information with respect to a plurality of regions (SR) set based on the reference positions, setting the element arrangement direction that is across the plurality of elements, and detecting a first edge point as a tracking start point at which a scan line that is across the plurality of elements and used by the decode part in symbol decoding intersects with an edge of an element, wherein each of the plurality of regions is parallel with the scanning line, wherein the profile information relates the element (E) with respect to a plurality of regions (SR);
   a determining step, determining whether the regions are in the symbol based on the profile information by matching the profile information with the reference profile information;
   a border element identification step, identifying at least one border element candidate by using position information of the regions determined as in the symbol, wherein the border element identification part (55) sets a position of the region (SR) that is set next and determined as not in the symbol as the border element candidate by referring to the position information of the region (SR) used in a previous determination and determined as in the symbol; and
   a border identification step, identifying at least one border of the symbol based on the border element candidate,
   wherein the border identification step scans within each of the plurality of elements by sequentially setting the plurality of regions, detects a second tracking point and the border identification step detects and sets a second edge point on the edge of an element when the second edge point is from an inside of the symbol toward an outside until no edge point is detected,
   the border identification step sets an end edge point that is lastly detected as a tracking end point, and
   the border identification step sets a direction of a line passing through the tracking start point and the tracking end point as a module arrangement direction (D 1).

13. An image processing program, causing a computer to function as the symbol border identification device (5) as claimed in claim 1, wherein the image processing program causes the computer to function as the decode part (52), the profile information identification part (53), the determination part (54), the border element identification part (55), and the border identification part (56).

**Patentansprüche**

1. Symbolrand-Identifizierungsvorrichtung (5), die umfasst:

   eine Bilderfassungsvorrichtung, die konfiguriert ist, um Bilddaten zu erfassen, in denen ein Symbol fotografiert ist;
   **dadurch gekennzeichnet, dass** die Symbolrand-Identifizierungsvorrichtung ferner umfasst:

   einen Speicher, der konfiguriert ist, um wenigstens Referenzprofil-Informationen (581) zu speichern, die sich auf eine Vielzahl von Elementen (E) beziehen, die das Symbol als eine Referenz bilden;
ein Dekodierteil (52), das konfiguriert ist, um das Symbol, das in dem Bild umfasst ist, zu identifizieren, um

Referenzpositionen einer Vielzahl von Elementen (E) zu identifizieren, durch Dekodieren des Symbols, das in einem Bild umfasst ist,

wobei die Vielzahl von Elementen (E) in einer Elementanordnungsrichtung angeordnet ist;
ein Profilinformations-Identifizierungsteil (53), das konfiguriert ist, um Profilinformationen in Bezug auf eine Vielzahl von Bereichen (SR) zu erhalten, die basierend auf den Referenzpositionen eingestellt sind,
die Elementanordnungsrichtung einstellt, die über die Vielzahl von Elementen verläuft, und einen ersten Randpunkt als einen Verfolgungsstartpunkt erfasst, an dem eine Abtastlinie, die über die Vielzahl von Elementen verläuft und die von dem Dekodierteil bei der Symboldekodierung verwendet wird, mit einem Rand eines Elements schneidet, wobei jeder der Vielzahl von Bereichen parallel zu der Abtastlinie ist, wobei die Profilinformationen das Element (E) in Bezug auf die Vielzahl von Bereichen (SR) in Beziehung setzt;

ein Bestimmungsteil (54), das konfiguriert ist, zu bestimmen, ob die Bereiche in dem Symbol sind, basierend auf den Profilinformationen, durch Abgleichen der Profilinformationen mit den Referenzprofilinformationen;
ein Randelement-Identifizierungsteil (55), das konfiguriert ist, mindestens einen Randelementkandidaten zu identifizieren, durch Verwenden von Positionsinformationen der Bereiche, die wie in dem Symbol bestimmt wurden,
wobei das Randelement-Identifizierungsteil (55) konfiguriert ist, um eine Position des Bereichs (SR) einzustellen, der als nächster eingestellt ist und als nicht in dem Symbol als der Randelementkandidat bestimmt wird, durch Bezugnahme auf die Positionsinformationen des Bereichs (SR), der in einer vorherigen Bestimmung verwendet und

der als in dem Symbol bestimmt wurde; und

ein Randidentifizierungsteil (56), das konfiguriert ist, um wenigstens einen Rand des Symbols, basierend auf dem Randelementkandidaten, zu identifizieren,
wobei das Randidentifizierungsteil (56) ferner konfiguriert ist, innerhalb jedes der Vielzahl von Elementen durch sequentielles Einstellen der Vielzahl von Bereichen zu abzutasten, um einen zweiten Verfolgungspunkt zu erfassen, und das Randidentifizierungteil (56) konfiguriert ist, um einen zweiten Randpunkt an dem Rand eines Elements zu erfassen und einzustellen, wenn der zweite Randpunkt von einer Innenseite des Symbols in Richtung einer Außenseite, bis kein Randpunkt mehr erfasst wird,
wobei das Randidentifizierungsteil (56) konfiguriert ist, um einen Endrandpunkt einzustellen, der als letzter als ein Verfolgungsendpunkt erfasst wird, und
das Randidentifizierungsteil (56) konfiguriert ist, um eine Richtung einer Linie, die durch den Verfolgungsstartpunkt und den Verfolgungsendpunkt verläuft als Modulanordnungsrichtung(D1) einzustellen.

2. Symbolrand-Identifizierungsvorrichtung (5) gemäß Anspruch 1, wobei das Dekodierteil (52) ferner konfiguriert ist, Referenzprofil-Informationen zu identifizieren, die sich auf die Elemente beziehen, die aus einem Dekodierergebnis erhalten werden,

3. Symbolrand-Identifizierungsvorrichtung (5) gemäß Anspruch 1 oder 2, wobei das Profilinformations-Identifizierungsteil (53) konfiguriert ist, um wenigstens eine der Formen und Positionen der Bereiche, basierend auf einer Referenzrichtung, einzustellen, die durch ein Array der Referenzpositionen der Elemente, identifiziert durch das Dekodierteil (52), bestimmt wurden.

4. Symbolrand-Identifizierungsvorrichtung (5) gemäß einem der Ansprüche 1 bis 3, wobei das Profilinformations-Identifizierungsteil (53) konfiguriert ist, um die Bereiche einzustellen, so dass ein Bereich der Bereiche sich nicht über die Elemente erstreckt, und das Bestimmungsteil (54) konfiguriert ist, um individuell zu bestimmen, ob jeder der der Bereiche in dem Symbol ist.

5. Symbolrand-Identifizierungsvorrichtung (5) gemäß Anspruch 2, wobei das Profilinformations-Identifizierungsteil (53) konfiguriert ist, um die Bereiche einzustellen, so dass ein Bereich von den Bereichen sich über die Elemente erstreckt.

6. Symbolrand-Identifizierungsvorrichtung (5) gemäß einem der Ansprüche 1 bis 5,
wobei die Profilinformationen mindestens einen von einem Pixelwert, eine Pixelwertvariation, binäre Daten und eine Breite des Elements umfasst.

7. Symbolrand-Identifizierungsvorrichtung (5) gemäß Anspruch 5, wobei die Profilinformationen einen norminalisierten Wert einer Breite des Elements umfassen.

8. Symbolrand-Identifizierungsvorrichtung (5) gemäß Anspruch 2 oder 5, wobei die Referenzprofilinformationen wenigstens eines von binären Daten, eine Breite des Elements, und einem normalisierten Wert der Breite des Elements umfasst.

9. Symbolrand-Identifizierungsvorrichtung (5) gemäß Anspruch 6 oder 7, wobei das Profilinformations-Identifizierungsteil (53) in Bezug auf ein Bild, umfassend die Bereiche, einen Filterprozess unter Verwendung eines Raumfilters mit einer Kernelgröße durchführt, passend mit der Modulbreite eines Moduls, das das Element bildet, und die Profilinformationen unter Verwendung von Pixelwerten erhält, die aus dem Bild extrahiert werden, auf das der Filterprozess angewendet wird.

10. Symbolrand-Identifizierungsvorrichtung (5) gemäß einem der Ansprüche 1 bis 9, wobei das Symbol ein zweidimensionales Symbol ist, bei dem die Elemente in zwei Dimensionen angeordnet sind, und das Profilinformations-Identifizierungsteil (53) konfiguriert ist, um die Profilinformationen in Bezug auf die Bereiche zu erhalten, die auf den Referenzpositionen der Elemente die auf einer äußersten Seite in dem Symbols angeordnet sind.

11. Symbolrand-Identifizierungsvorrichtung (5) gemäß einem der Ansprüche 1 bis 10, wobei das Bild ein optisches Lesemedium umfasst, das von dem Symbol getrennt ist, und die Symbolrand-Identifizierungsvorrichtung (5) ein Bereich-Identifizierungsteil umfasst, das einen Bereich identifiziert, in dem Erkennung des optischen Lesemediums mit Bezug auf den Rand des Symbols durchgeführt wird, das identifiziert ist.

12. Symbolrand-Identifizierungsverfahren, umfassend:

einen Erfassungsschritt, bei dem Bilddaten erfasst werden, in denen ein Symbol fotografiert wird;
einen Speicherschritt, bei dem in einem Speicher wenigstens Referenzprofil-Informationen (581) die sich auf eine Vielzahl von Elementen (E) beziehen, die das Symbol als Referenz bilden, gespeichert werden;
einen Dekodierschritt, bei dem das Symbol, das in dem Bild umfasst ist, identifiziert wird, um Referenzpositionen einer Vielzahl von Elementen (E) durch Dekodieren des Symbols, das in einem Bild umfasst ist, zu identifizieren, wobei die Vielzahl von Elementen (E) in einer Elementanordnungsrichtung angebracht ist;
einen Profilinformations-Identifizierungsschritt, der Profilinformationen in Bezug auf eine Vielzahl von Bereichen (SR), basierend auf den Referenzpositionen eingestellt ist, erhält,
Einstellen der Elementanordnungsrichtung, die über die Vielzahl von Elementen verläuft, und Erfassen eines ersten Randpunkts als einen Verfolgungsstartpunkt, an dem eine Abtastlinie, die über die Vielzahl von Elementen verläuft und von dem Dekodierteil bei der Symboldekodierung verwendet wird, mit einem Rand eines Elements schneidet, wobei jeder der Vielzahl von Bereichen parallel zu der Abtastlinie ist, wobei die Profilinformationen sich auf das Element (E) in Bezug auf eine Vielzahl von Bereichen (SR) beziehen;
einen Bestimmungsschritt, der bestimmt, ob die Bereiche in dem Symbol sind, basierend auf den Profilinformationen, durch Abgleichen der Profilinformationen mit den Referenzprofil-Informationen;
einen Randelement-Identifizierungsschritt, der wenigstens einen Randelementkandidaten identifiziert, unter Verwendung von Positionsinformationen der Bereiche, bestimmt als in dem Symbol, wobei das Randelement-Identifizierungsteil (55) eine Position des Bereichs (SR) einstellt, der als nächster eingestellt wird und als nicht in dem Symbol als der Randelementkandidat bestimmt wird, durch sich Beziehen auf die Positionsinformationen des Bereichs (SR), verwendet in einer vorhergehenden Bestimmung und als in dem Symbol befindlich bestimmt wurde; und einen Randidentifizierungsschritt, der wenigstens einen Rand des Symbols basierend auf dem Randelementkandidaten identifiziert,
wobei der Randidentifizierungsschritt innerhalb jedes der Vielzahl von Elementen abtastet durch sequentielles Einstellen der Vielzahl von Bereichen einen zweiten Verfolgungspunkt erfasst und

der Randidentifizierungsschritt einen zweiten Randpunkt auf dem Rand eines Elements erfasst und einstellt, wenn der zweite Randpunkt von einer Innenseite des Symbols nach außen verläuft, bis kein Randpunkt erfasst wird,

der Randidentifizierungsschritt einen Endrandpunkt einstellt, der als letzter als ein Verfolgungsendpunkt erfasst wird, und der Randidentifizierungsschritt eine Richtung einer Linie einstellt, die durch den Verfolgungsstartpunkt und den Verfolgungsendpunkt als Modulanordnungsrichtung (DI) verläuft.

13. Bildverarbeitungsprogramm, das einen Computer veranlasst, als die Symbolrand-Identifizierungsvorrichtung (5) gemäß Anspruch 1 zu fungieren, wobei das Bildverarbeitungsprogramm den Computer veranlasst, als das Dekodierteil (52), das Profilinformations-Identifizierungsteil (53), das Bestimmungsteil (54), das Randelement-Identifizierungsteil (55) und das Rand-Identifizierungsteil (56) zu fungieren.

## Revendications

1. Dispositif d'identification de bordure de symbole (5), comprenant :

un dispositif d'acquisition d'images configuré pour acquérir des données d'image dans lesquelles un symbole est photographié ; **caractérisé en ce que** le dispositif d'identification de bordure de symbole comprend en outre :

une mémoire configurée pour mémoriser au moins des informations de profil de référence (581) relatives à une pluralité d'éléments (E) qui forment le symbole comme référence ;
une partie de décodage (52), configurée pour identifier le symbole compris dans l'image pour identifier des positions de référence d'une pluralité d'éléments (E) en décodant le symbole compris dans une image, dans laquelle la pluralité d'éléments (E) est disposée dans une direction d'agencement d'éléments ;
une partie d'identification d'informations de profil (53), configurée pour obtenir des informations de profil par rapport à une pluralité de régions (SR) définies sur la base des positions de référence, définir la direction d'agencement d'éléments qui est à travers la pluralité d'éléments, et détecter un premier point de bord en tant que point de départ de suivi auquel une ligne de balayage qui traverse la pluralité d'éléments et utilisé par la partie de décodage dans le décodage de symboles croise un bord d'un élément, dans lequel chacune de la pluralité de régions est parallèle à la ligne de balayage, dans lequel les informations de profil concernent l'élément (E) par rapport à la pluralité de régions (SR);
une partie de détermination (54), configurée pour déterminer si les régions sont dans le symbole sur la base des informations de profil en faisant correspondre les informations de profil avec les informations de profil de référence ;
une partie d'identification d'élément de bordure (55), configurée pour identifier au moins un candidat d'élément de bordure en utilisant des informations de position des régions déterminées comme dans le symbole, dans lequel la partie d'identification d'élément de bordure (55) est configurée pour définir une position de la région (SR) qui est définie ensuite et déterminée comme n'étant pas dans le symbole en tant qu'élément de bordure candidat en se référant aux informations de position de la région (SR) utilisées dans une détermination précédente et déterminées comme dans le symbole ; et
une partie d'identification de bordure (56), configurée pour identifier au moins une bordure du symbole sur la base de l'élément de bordure candidat,
dans lequel la partie d'identification de bordure (56) est en outre configurée pour balayer à l'intérieur de chacun de la pluralité d'éléments en réglant séquentiellement la pluralité de régions, pour détecter un deuxième point de suivi et la partie d'identification de bordure (56) est configurée pour détecter et définir un deuxième point de bordure sur le bord d'un élément lorsque le deuxième point de bordure est d'un intérieur du symbole vers un extérieur jusqu'à ce qu'aucun point de bordure ne soit détecté,
la partie d'identification de bordure (56) est configurée pour établir un point de bordure d'extrémité qui est détecté en dernier comme point d'extrémité de suivi, et
la partie d'identification de bordure (56) est configurée pour définir une direction d'une ligne passant par le point de début de suivi et le point d'arrivée de suivi en tant que direction d'agencement de module (D1).

2. Dispositif d'identification de bordure de symbole (5) selon la revendication 1, dans lequel la partie de décodage (52) est en outre configurée pour identifier des informations de profil de référence relatives aux éléments obtenus à partir d'un résultat de décodage.

3. Dispositif d'identification de bordure de symboles (5) selon la revendication 1 ou 2, dans lequel la partie d'identification d'informations de profil (53) est configurée pour définir au moins une des formes et positions des régions sur la base d'une direction de référence déterminée par un réseau des positions de référence des éléments identifiés par la partie de décodage (52).

4. Dispositif d'identification de bordure de symboles (5) selon une quelconque des revendications 1 à 3, dans lequel la partie d'identification d'informations de profil (53) est configurée pour définir les régions de sorte qu'une région des régions ne s'étende pas sur les éléments, et la partie de détermination (54) est configurée pour déterminer individuellement si chacune des régions se trouve dans le symbole.

5. Dispositif d'identification de bordure de symboles (5) selon la revendication 2, dans lequel la partie d'identification d'informations de profil (53) est configurée pour définir les régions de sorte qu'une région des régions s'étende sur les éléments.

6. Dispositif d'identification de bordure de symboles (5) selon une quelconque des revendications 1 à 5, dans lequel les informations de profil comprennent au moins une valeur parmi une valeur de pixel, une variation de valeur de pixel, des données binaires et une largeur de l'élément.

7. Dispositif d'identification de bordure de symboles (5) selon la revendication 5, dans lequel les informations de profil comprennent une valeur normalisée d'une largeur de l'élément.

8. Dispositif d'identification de bordure de symboles (5) selon la revendication 2 ou 5, dans lequel les informations de profil de référence comprennent au moins une donnée parmi des données binaires, une largeur de l'élément et une valeur normalisée de la largeur de l'élément.

9. Dispositif d'identification de bordure de symboles (5) selon la revendication 6 ou 7, dans lequel la partie d'identification d'informations de profil (53) exécute, par rapport à une image comprenant les régions, un processus de filtrage utilisant un filtre spatial ayant une taille de noyau correspondant à une largeur de module d'un module formant l'élément, et obtient les informations de profil en utilisant des valeurs de pixels extraites de l'image à laquelle le processus de filtrage est appliqué.

10. Dispositif d'identification de bordure de symboles (5) selon une quelconque des revendications 1 à 9, dans lequel le symbole est un symbole bidimensionnel dans lequel les éléments sont agencés en deux dimensions et
la partie d'identification d'informations de profil (53) est configurée pour obtenir les informations de profil par rapport aux régions définies sur la base des positions de référence des éléments disposés sur un côté le plus à l'extérieur dans le symbole.

11. Dispositif d'identification de bordure de symboles (5) selon une quelconque des revendications 1 à 10, dans lequel l'image comprend un support de lecture optique séparé du symbole, et le dispositif d'identification de bordure de symbole (5) comprend une partie d'identification de région identifiant une zone dans laquelle s'effectue la reconnaissance du support de lecture optique en se référant à la bordure du symbole qui est identifié.

12. Procédé d'identification de bordure de symbole, comprenant :

une étape d'acquisition, acquérant des données d'image dans lesquelles un symbole est photographié ;
une étape de mémorisation, mémorisant dans une mémoire au moins des informations de profil de référence (581) relatives à une pluralité d'éléments (E) qui forment le symbole en tant que référence ;
une étape de décodage, identifiant le symbole compris dans l'image pour identifier les positions de référence d'une pluralité d'éléments (E) en décodant le symbole compris dans une image, la pluralité d'éléments (E) étant agencés dans une direction d'agencement d'éléments ;
une étape d'identification d'informations de profil, l'obtention d'informations de profil par rapport à une pluralité de régions (SR) étant définie sur la base des positions de référence, la définition de la direction d'agencement d'élément qui traverse la pluralité d'éléments, et la détection d'un premier point de bord en tant que point de départ de suivi auquel une ligne de balayage qui traverse la pluralité d'éléments et utilisée par la partie de décodage dans le décodage de symboles croise un bord d'un élément, dans lequel chacune de la pluralité de régions est parallèle à la ligne de balayage, dans lequel les informations de profil concernent l'élément (E) par rapport à une pluralité de régions (SR) ;
une étape de détermination, déterminant si les régions sont dans le symbole sur la base des informations de profil en faisant correspondre les informations de profil avec les informations de profil de référence ;
une étape d'identification d'élément de bordure, identifiant au moins un candidat d'élément de bordure en utilisant des informations de position des régions déterminées comme dans le symbole, dans lequel la partie d'identification d'élément de bordure (55) définit une position de la région (SR) qui est définie ensuite et déterminée comme n'étant pas dans le symbole en tant qu'élément de bordure candidat en se référant aux informations de position de la région (SR) utilisées dans le cadre d'une détermination précédente et déterminées comme dans le symbole ; et
une étape d'identification de bordure, identifiant au moins une bordure du symbole sur la base de l'élément de bordure candidat,

dans lequel l'étape d'identification de bordure balaie à l'intérieur de chacun de la pluralité d'éléments en définissant séquentiellement la pluralité de régions, détecte un deuxième point de suivi et l'étape d'identification de bordure détecte et définit un deuxième point de bordure sur la bordure d'un élément lorsque le deuxième point de bordure est d'un intérieur du symbole vers un extérieur jusqu'à ce qu'aucun point de bord ne soit détecté,

l'étape d'identification de bordure définit un point de bordure final qui est finalement détecté comme un point final de suivi, et

l'étape d'identification de bordure définit une direction d'une ligne passant par le point de départ de suivi et le point final de suivi en tant que direction d'agencement de module (D1).

13. Programme de traitement d'image, faisant fonctionner un ordinateur comme dispositif d'identification de bordure de symbole (5) selon la revendication 1, dans lequel le programme de traitement d'image amène l'ordinateur à fonctionner comme la partie de décodage (52), la partie d'identification d'informations de profil (53), la partie de détermination (54), la partie d'identification d'élément de bordure (55) et la partie d'identification de bordure (56).

FIG. 1

R2

R1

R2

# FIG. 2

（a）

One-dimensional symbol

m1 m2 m3 m4 m5 m6 m7 m8 m9 m10 m11 m12 m13

E1 E2 E3 E4 E5 E6 E7 E8 E9

（b）

Two-dimensional symbol
(multi-row)

（c）

Two-dimensional symbol
(matrix)

# FIG. 3

（a）

（b）

（c）

（d）

FIG. 4

FIG. 5

FIG. 6

FIG. 7

（a）

D1 ⟋ 0

L

P₀

（b）

Brightness value

Distance from start point

（c）

Brightness differential value

Distance from start point

（d）

Binary result

Distance from start point

# FIG. 8

FIG. 9

( a )

Position in module
arrangement
direction

L

1 2 3 4 5

Position on scan
line

( b )

Brightness
value

Distance from start point

( c )

Binary result

Distance from start point

# FIG. 10

(a)

Position in module
arrangement
direction

Position on scan
line

(b)

Brightness
value

Position A on scan line

(c)

Binary result

Position A on scan line

# FIG. 11

# FIG. 12

(a)

Step 1

(b)

Step 2

(c)

Step 3

(d)

Step 4

(e)

Step 5

FIG. 13

FIG. 14

(a)

Data character(A)　　　　Data character(I)

w1　　　　w3　　　w5

w2　　　　　　w4

Start line

⊙ Start point

○ Verification point

(b)

Check line

Check line

⊙ Start point

○ Verification point

● Border point

FIG. 15

(a)

Data character

Start point

e1

e2

Start
line

p

(b)

Check
line

e1

e2

p

Start point

Verification point

(c)

Check
line

Start point

Verification point

Border point

FIG. 16

Data character(V)

Data character(W)

e1

e2

p

Start point

FIG. 17

（a）

Data character(V)　　　Data character(W)

Start line

e1　　　e3　　　e5

e2　　　e4

e6

G　H　I　J　K

p

◎ Start point

○ Verification point

（b）

Check line
Check line
Start line

◎ Start point

○ Verification point

● Border point

FIG. 18

Direction of obtaining a border point

Direction of obtaining a border point

Border intending to obtain

Direction of array of modules

Direction of array of modules

FIG. 19

EP 3 933 661 B1

**EP 3 933 661 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002329163 A

- US 2014008442 A1